# EUROPEAN PATENT APPLICATION

(11) **EP 4 579 619 A1**
(43) Date of publication of application: **02.07.2025**
(21) Application number: 24223201.5
(22) Date of filing: 24.12.2024
(51) Int. Cl.: G07C 9/00, G07C 9/27, H04B 5/79, H04W 12/08

(54) **APPARATUS AND METHODS FOR USE IN SECURITY SYSTEMS AND THE LIKE**

(30) Priority: 28.12.2023 GB 202320080
(71) Applicant: Essence Security International (E.S.I.) Ltd., 4672530 Herzlia Pituach (IL)
(72) Inventor: Amir, Haim, 4672530 Herzlia Pituach (IL); Amir, Ohad, 4672530 Herzlia Pituach (IL)
(74) Representative: Marks & Clerk LLP

(57) **Abstract**

The present disclosure relates generally to apparatus and methods for at least requesting operation of a system configured to control at least a security function for a premises, and wherein a wireless-power receiving device is configured to, upon wirelessly receiving power, receive identification (ID) information from a mobile device and communicate the identification (ID) information to a remote device (e.g. a control panel/control hub or other controller) in order to request operation of the system. The remote device, in response to receiving the request to operate the system, carrying out an authorization process using the identification information from the mobile device.

## Description

### Technical Field

The present disclosure relates to apparatus and methods for use in security systems and the like, for example, for requesting operation of a system configured to control at least a security function for a premises. In particular, though not exclusively, the apparatus and methods described herein relate to security and door access systems. In some embodiments, the apparatus and methods further comprise determining whether and/or how to operate the system based on the request and may operate the system accordingly.

### Background

Known security systems and door access systems may require a user, if authorized, to interact with some form of interface on the exterior of a premises prior to entering the premises so that an alarm might be disarmed and/or a door unlocked or unlatched. Corresponding interactions may be required when exiting the property.

Such interfaces come in different forms and may include intercoms which are serviced by people inside the building, keypads for entering a passcode and key fobs which provide a passive electronic key, to name but a few. More recent developments have seen security systems controlled using software, e.g. applications, on mobile devices in which a user can open an application and engage with the system when approaching or at an entrance of the premises.

In addition to the above, the present invention also seeks to provide, more generally, an improved method and system for operating electrical devices within a premises. Such electrical devices may form part of a security or access system, or may relate to a home automation system or other electrical device which may be desirably controlled from the exterior of a building or other premises, or a part thereof.

WO/2021/140506 discloses a method of authorizing an action for controlling an electrical device in a premises using a mobile device, comprising: reading, by the mobile device, an RFID (radio frequency identification) tag installed at a fixed location on the premises, to obtain RFID tag identification information; and transmitting, by the mobile device, an authorization request to a remote server, wherein the authorization request comprises mobile device identification information and causes the server to carry out an authorization process using the mobile device identification information to provide an authorized action, wherein the authorized action is associated with the RFID tag; and, transmitting the authorized action to a controller at the premises, wherein the controller is configured to control the electrical device to carry out the action upon receiving the action.

Aspects of the present disclosure aim to provide an improved, or at least an alternative, apparatus and methods.

Reference to any prior art in this specification is not an acknowledgement or suggestion that this prior art forms part of the common general knowledge in any jurisdiction, or globally, or that this prior art could reasonably be expected to be understood, regarded as relevant/or combined with other pieces of prior art by a person skilled in the art.

Various aspects and embodiments of the disclosure are set out in the claims at the end of this specification. These and other aspects of the present disclosure and further embodiments of the aspects will become apparent from the following figures and description, given by way of non-limiting example only. As will be appreciated, other embodiments are also possible and are within the scope of the claims.

### Summary

The present disclosure provides apparatus and methods for requesting operation of a system configured to control at least a security function for a premises, according to the appended claims. Disclosed herein are various apparatus, methods and systems relating to the same.

One or more aspects of the present disclosure relate generally to apparatus and methods for at least requesting operation of a system configured to control at least a security function for a premises, and wherein a wireless-power receiving device is configured to, upon wirelessly receiving power, receive identification (ID) information from a mobile device and communicate the identification (ID) information to a remote device (e.g. a control panel/control hub or other controller) in order to request operation of the system.

In accordance with a first aspect of the disclosure there is provided a method of requesting operation of a system configured to control at least a security function for a premises, the method using a wireless-power receiving device, the wireless-power receiving device comprising a coupling interface for wirelessly receiving power and data from a wireless-power transmitting device having a complementary coupling interface whereby the power and data is conveyed to the wireless-power receiving device from the wireless-power transmitting device automatically by and upon the complementary coupling interface being held at the coupling interface, wherein the method comprises, with the wireless-power receiving device having been installed at the premises and the wireless-power transmitting device being a mobile device: by and upon an action of the complementary coupling interface of the mobile device being held at the coupling interface of the wireless-power receiving device, the wireless-power receiving device receiving via the coupling interface and from the mobile device, identification information and energy for powering the wireless-power receiving device, the coupling interface comprising a first antenna for receiving at least said energy; using energy received from the mobile device by said action to power a wireless communications interface of the wireless-power receiving device having an antenna that is different from said first antenna; transmitting to a remote device, by the wireless-power receiving device via the wireless communications interface powered using the energy, a request to operate the system based on the identification information from the mobile device; and the remote device, in response to receiving the request to operate the system, carrying out an authorization process using the identification information from the mobile device.

In the authorization process the remote device may determine, based on the identification information from the mobile device, whether the identification information from the mobile device corresponds to an authorized mobile device and/or to an authorized user.

The remote device may perform an authentication process to authenticate the mobile device.

The remote device may perform an authentication process to authenticate the wireless power-receiving device.

The remote device may authenticate the mobile device by authenticating the identification information from the mobile device.

The remote device may authenticate the wireless power-receiving device by authenticating identification information from the wireless power-receiving device.

The mobile device may use a private key of the mobile device to sign the identification information that the mobile device provides to the wireless power receiving device; and the remote device may authenticate the mobile device using a public key of the mobile device.

The method may further comprise the remote device transmitting to the wireless-power receiving device a response to the request to operate the system, the response comprising a determination made by the remote device based on the identification information received from the mobile device, the determination comprising that the remote device has authenticated a source of the identification information.

The determination made by the remote device based on the identification information received from the mobile device may also comprise that a user associated with the identification information received from the mobile device is authorized to operate the system.

The method may further comprise the mobile device requiring a user to unlock the mobile device using one or more mobile device security features prior to the powering and resulting operation of the wireless-power receiving device; optionally, wherein the security features comprise a username, a password, a security key, or a biometric sensor such as a facial, an iris or a fingerprint recognition sensor.

The method may further comprise the remote device: prior to receiving the request to operate the system; in a registration process, receiving and storing one or more identifiers for matching with respective identification information to be received from one or more mobile devices; wherein, in response to receiving the request to operate the system, the remote device checks whether the one or more identifiers comprises an identifier corresponding to the identification information from said mobile device to determine whether the identification information from said mobile device mobile device corresponds to an authorized mobile device and/or to an authorized user.

The method may comprise the remote device receiving an identifier corresponding to the identification information from said mobile device, from the wireless-power receiving device, in response to a preliminary action of the complementary coupling interface of the mobile device being held at the coupling interface of the wireless-power receiving device for the registration process.

The method may comprise the remote device receiving an identifier corresponding to the identification information from said mobile device, wherein the identifier corresponding to the identification information from said mobile device being first received by the remote device for the registration process, from a server located via a wide area network (WAN) that includes the server and the remote device, the server having received said identifier from the mobile device.

The method may comprise the remote device further receiving, from a server located via a wide area network (WAN) that includes the server and the remote device, an identifier corresponding to identification information from a different mobile device and an instruction to at least one of add, change or delete a registered authorization permission in respect of the different mobile device.

The method may comprise the identifier corresponding to identification information from the different mobile device and the instruction to at least one of add, change or delete the registered authorization permission in respect of the different mobile device being received via a server located via a wide area network (WAN) that includes the server and the remote device. The server may be configured to transmit to the remote device the identifier corresponding to identification information from a different mobile device and the instruction to at least one of add, change or delete a registered authorization permission in respect of the different mobile device in response to a request from the mobile device to at least one of add, change or delete a registered authorization permission in respect of the different mobile device.

The WAN may be the Internet.

The server may comprise configuration information for the remote device and for a plurality of other remote devices configurable to have the same functionality as said remote device.

The one or more identifiers may comprise a plurality of identifiers for matching with a plurality of mobile devices and/or a plurality of authorized users.

The one or more identifiers may comprise a plurality of device IDs for matching with a respective plurality of mobile devices.

The remote device may be configured for: receiving an authentication key from a computing system via a wide area network (WAN) that includes the computing system and the remote device; and using the authentication key to authenticate that the identification information from said mobile device actually came from the mobile device identified by the identification information.

The authentication key may comprise a public key of the mobile device to authenticate that the identification information from said mobile device actually came from the mobile device identified by the identification information, using public key cryptography.

The computing system may comprise said server.

The authorization process may comprise determining, based on the identification information from the mobile device, at least one of: an electrical device that is permitted to be controlled; or an operation that an electrical device is permitted to perform.

The method may comprise, dependent at least on determining that authorization is granted as a result of the authorization process and, optionally, that the mobile device is authenticated as being authentic, the remote device transmitting an instruction to an electrical device to perform an operation.

The wireless-power receiving device may be further configured to receive input from a user via a user interface, the input comprising a selection for defining at least one operation to be performed by the system.

The method may further comprise: the wireless-power receiving device transmitting a request to the remote device for the at least one operation to be performed by the system. Optionally, the at least one operation to be performed by the system may comprise an ARM and/or DISARM instruction for a security device.

The user interface may be provided on the wireless-power receiving device.

In response to the action of the complementary coupling interface of the mobile device being held at the coupling interface, the wireless-power receiving device may perform a process for generating the request to operate the system and the process may comprise, enabling a feature on the wireless-power receiving device, the feature comprising the user interface for receiving the input from the user, and the request to operate the system comprising a request for the at least one operation selected to be performed by the system.

The method may comprise: the wireless-power receiving device receiving a notification from the remote device when the request to operate the system has been acknowledged by the remote device; and, in response to receiving the notification, the wireless-power receiving device enables the user interface for receiving the input from the user.

The user interface may be provided on the mobile device and the method may comprise: the wireless-power receiving device communicating with the mobile device using the coupling interface to receive the input from the user via the user interface on the mobile device.

The wireless-power receiving device may be configured to receive the input from the user via the user interface on the mobile device, prior to transmitting the request to operate the system.

The method may comprise: the wireless-power receiving device communicating with the mobile device using the coupling interface to notify the mobile device when the request to operate the system has been acknowledged by the remote device; and, in response to receiving the notification, the mobile device may communicate to the wireless-power receiving device using the coupling interface the input from the user via the user interface on the mobile device.

Optionally, upon receiving notification that the request to operate the system has been acknowledged, the mobile device may automatically open an application, or in some embodiments a pop-up menu, on the mobile device to communicate the same.

In accordance with a second aspect of the disclosure there is provided a system configured to control at least a security function for a premises, the system comprising:
a wireless-power receiving device, for installation at the premises, comprising a wireless communications interface and a coupling interface; the coupling interface being configured for wirelessly receiving power and data from a wireless-power transmitting device which is constituted by a mobile device comprising at least one processor and a complementary coupling interface;
a computer readable data carrier comprising instructions which, when executed by the at least one processor of the wireless-power transmitting device, cause the wireless-power transmitting device to convey the power and data to the wireless-power receiving device automatically by and upon the complementary coupling interface being held at the coupling interface, the data comprising identification information; and
a remote device;
the system being configured such that:
   by and upon an action of the complementary coupling interface of the mobile device being held at the coupling interface of the wireless-power receiving device, the wireless-power receiving device receiving via the coupling interface and from the mobile device, the identification information and energy for powering the wireless-power receiving device, the coupling interface comprising a first antenna for receiving at least said energy;
   using energy received from the mobile device by said action to power the wireless communications interface of the wireless-power receiving device having an antenna that is different from said first antenna;
   transmitting to the remote device, by the wireless-power receiving device via the wireless communications interface powered using the energy, a request to operate the system based on the identification information from the mobile device; and
   the remote device, in response to receiving the request to operate the system, carrying out an authorization process using the identification information from the mobile device.

The data carrier may consist of a non-transient computer readable storage medium.

The data carrier may comprise a computer receivable signal.

The instructions may be provided in the form of a computer program product.

In carrying out the authorization process, the remote device may be configured to determine, based on the identification information from the mobile device, whether the identification information from the mobile device corresponds to an authorized mobile device and/or to an authorized user.

The remote device may be configured to perform an authentication process to authenticate the mobile device.

The remote device may be configured to authenticate the mobile device by authenticating the identification information from the mobile device.

The remote device may be configured to authenticate the mobile device using a public key of the mobile device; and the computer program product is further configured to cause the wireless-power transmitting device to use a private key of the mobile device to sign the identification information that the mobile device provides to the wireless power receiving device.

The remote device may be further configured to transmit to the wireless-power receiving device a response to the request to operate the system, the response comprising a determination made by the remote device based on the identification information received from the mobile device, the determination comprising that the remote device has authenticated a source of the identification information.

The remote device may be further configured to perform a registration process, prior to receiving the request to operate the system; wherein, in the registration process, the remote device is configured to receive and store (in a memory) one or more identifiers for matching with respective identification information to be received from one or more mobile devices; wherein, in response to receiving the request to operate the system, the remote device is configured to check whether the one or more identifiers comprises an identifier corresponding to the identification information from the mobile device to determine whether the identification information from the mobile device mobile device corresponds to an authorized mobile device and/or to an authorized user.

In the registration process, the remote device is configured to receive an identifier corresponding to the identification information from the mobile device, from the wireless-power receiving device, in response to a preliminary action of the complementary coupling interface of the mobile device being held at the coupling interface of the wireless-power receiving device for the registration process.

The system may comprise a server located via a wide area network (WAN) that includes the server and the remote device; and wherein, in the registration process, the remote device is configured to receive an identifier corresponding to the identification information from the mobile device, from the server; the server being configured to receive said identifier from the mobile device.

The system may comprise a server located via a wide area network (WAN) that includes the server and the remote device, or the system described in the paragraph above, wherein the remote device may be further configured to: receive an identifier corresponding to identification information from a different mobile device and an instruction to at least one of add, change or delete a registered authorization permission in respect of the different mobile device; wherein the identifier corresponding to identification information from the different mobile device and the instruction to at least one of add, change or delete the registered authorization permission in respect of the different mobile device is received by the remote device via the server.

The wireless-power receiving device may be further configured to receive input from a user via a user interface, the input comprising a selection for defining at least one operation to be performed by the system.

The user interface may be on the wireless-power receiving device.

The user interface may be on the mobile device and the wireless-power receiving device may be configured to communicate with the mobile device using the coupling interface to receive the input from the user via the user interface on the mobile device.

The wireless-power receiving device may be configured to transmit a request to the remote device for the at least one operation to be performed by the system; optionally, the at least one operation to be performed by the system comprises an ARM and/or DISARM instruction for a security device.

The computer program product may be configured to cause the mobile device to require a user to unlock the mobile device using one or more mobile device security features prior to the powering and resulting operation of the wireless-power receiving device; optionally, wherein the security features comprise a username, a password, a security key, or a biometric sensor such as a facial, an iris or a fingerprint recognition sensor.

The remote device may be configured such that the authorization process comprises determining, based on the identification information from the mobile device, at least one of: an electrical device that is permitted to be controlled; or an operation that an electrical device is permitted to perform.

The remote device may be configured such that, dependent at least on determining that authorization is granted as a result of the authorization process and, optionally, that the mobile device is authenticated as being authentic, the remote device transmits an instruction to an electrical device to perform an operation.

The system may be configured such that the wireless-power receiving device receives input from a user via a user interface, the input comprising a selection for defining at least one operation to be performed by the system, wherein the user interface is on the wireless-power receiving device, and one of: prior to transmitting the request to operate the system in response to the action of the complementary coupling interface of the mobile device being held at the coupling interface, the wireless-power receiving device performs a process for generating the request to operate the system and the process comprises, enabling a feature on the wireless-power receiving device, the feature comprising the user interface for receiving the input from the user, and the request to operate the system comprising a request for the at least one operation selected to be performed by the system; or in response to the wireless-power receiving device receiving an acknowledgement from the remote device that the request to operate the system has been received by the remote device, the wireless-power receiving device enabling the user interface for receiving the input from the user.

The system may be configured such that the wireless-power receiving device receives input from a user via a user interface, the input comprising a selection for defining at least one operation to be performed by the system, the user interface is on the mobile device and the wireless-power receiving device is configured to communicate with the mobile device using the coupling interface to receive the input from the user via the user interface on the mobile device, and one of: prior to transmitting the request to operate the system, the wireless-power receiving device receiving the input from the user via the user interface on the mobile device; or the wireless-power receiving device communicating with the mobile device using the coupling interface to notify the mobile device when the request to operate the system has been acknowledged by the remote device; and, in response to receiving the notification, the mobile device communicating to the wireless-power receiving device using the coupling interface, the input from the user; optionally, upon receiving the notification that the request to operate the system has been acknowledged, the mobile device opens an application, or a pop-up notice, on the mobile device to communicate the notification.

The server may be configured to transmit said identifier to said remote device in response to a request received from the mobile device to provide said instruction to at least one of add, change or delete a registered authorization permission in respect of the different mobile device.

The WAN may be the Internet.

The server may comprise configuration information for the remote device and for a plurality of other remote devices configurable to have the same functionality as said remote device.

The one or more identifiers may comprise a plurality of identifiers for matching with a plurality of mobile devices and/or a plurality of authorized users.

The one or more identifiers may comprise a plurality of device IDs for matching with a respective plurality of mobile devices.

The remote device may be configured for: receiving an authentication key from a computing system via a wide area network (WAN) that includes the computing system and the remote device; and using the authentication key to authenticate that the identification information from said mobile device actually came from the mobile device identified by the identification information.

The authentication key may comprise a public key of the mobile device to authenticate that the identification information from said mobile device actually came from said the mobile device identified by the identification information, using public key cryptography.

The computing system may comprise said server.

The system may comprise a plurality of wireless-power receiving devices; and/or wherein said remote device is a control hub configured for installation at the premises.

In accordance with a third aspect of the disclosure there is provided a method of requesting operation of a system configured to control at least a security function for a premises, the method using a wireless-power receiving device, the wireless-power receiving device comprising a coupling interface for wirelessly receiving power and data from a wireless-power transmitting device having a complementary coupling interface whereby the power and data is conveyed to the wireless-power receiving device from the wireless-power transmitting device automatically by and upon the complementary coupling interface being held at the coupling interface, wherein the method comprises, with the wireless-power receiving device having been installed at the premises and the wireless-power transmitting device being a mobile device:
by and upon an action of the complementary coupling interface of the mobile device being held at the coupling interface of the wireless-power receiving device, the wireless-power receiving device receiving via the coupling interface and from the mobile device, identification information and energy for powering the wireless-power receiving device, the coupling interface comprising a first antenna for receiving at least said energy;
using energy received from the mobile device by said action to power a wireless communications interface of the wireless-power receiving device having an antenna that is different from said first antenna;
transmitting to a remote device, by the wireless-power receiving device via the wireless communications interface powered using the energy, a request to operate the system based on the identification information from the mobile device.

The action may comprise the complementary coupling interface being held at the coupling interface for a moment.

The request to operate the system may optionally define one or more operations that are being requested to be performed. However, in other embodiments, the request does not define any particular operations being requested. In some embodiments, what, if any, operations are to be performed are determined by a device that receives the request (i.e. the remote device or a subsequent device).

The request to operate the system may comprise an authorization request. The remote device may in response to receiving the request to operate the system determine whether a user associated with the identification information from the mobile device is authorized to operate the system.

The remote device may be remote from the wireless-power receiving device by being physically separated from the wireless-power receiving device. In some cases, the remote device may be in proximity of the wireless-power receiving device, for example, by being in the same room or building. In some cases, the remote device may be some distance from the wireless-power receiving device, for example, in another building or site.

In an example, the remote device may determine whether to perform a first at least one operation. For example, the first at least one operation may comprise changing an arming state of the system. The remote device may additionally or alternatively transmit a request to an electrical device to perform the at least one first operation or a part thereof. This may be the case, for example, where the at least one first operation additionally or alternatively comprises unlocking (or locking) and/or opening (or closing) a door.

The remote device may upon receiving the request to operate the system, or upon determining whether the first at least one operation is to be authorized in response to the request, transmit a system request to a server. The system request may optionally comprise said or another request to operate the system. Optionally the system request may inform the server of a change in arming state that was determined by the remote device.

In response to the system request, the server may optionally determine one or more operations to be performed by the system. The one or more operations may comprise a second at least one operation based on the first at least one operation. For example, the second at least one operation may comprise turning on a certain light in response to the remote device having determined the first at least one operation as disarming the system and/or opening a door. The server may then transmit a request to an electrical device to carry out the second at least one operation.

The system request may comprise an authorization request. The server may in response to receiving the system request determine whether a user associated with the identification information from the mobile device is authorized to operate the system (e.g. authorized to trigger the at least one second operation to be performed by the system).

The remote device may transmit to the wireless-power receiving device a response to the request to operate the system. The response may comprise an acknowledgement that the request has been received. Additionally, or alternatively, the response may comprise a determination made by the remote device based on the identification information received from the mobile device. For example, the determination may be that the remote device has authenticated a source of the identification information (e.g. verified that the identification information came from that mobile device) and/or authorized a user associated with the identification information received from the mobile device to operate the system.

The energy received from the mobile device during said moment may be received from a carrier wave wherein the identification information from the mobile device is defined by a modulation of the carrier wave.

The moment may be a predetermined amount of time. In some embodiments, the moment may be less than a predetermined amount of time, at least a predetermined amount of time or within a predetermined window of time. The moment may be a relatively short amount of time (e.g. typically a matter of some seconds).

The identification information from the mobile device is preferably unique. The identification information from the mobile device may identify the mobile device, for example, it may comprise mobile device identification information. In some embodiments, the identification information from the mobile device may additionally or alternatively identify a specific user of the mobile device (e.g. a number of users may be associated with a mobile device and the identification information from the mobile device may identify one of the number of users).

In some embodiments, at least one operation to be performed in response to the request to operate the system is performed by at least one electrical device of the system that is installed at the premises but that is not the wireless-power receiving device. In some embodiments, at least one operation to be performed in response to the request is to be performed by at least one electrical device of the system that is installed at the premises and also by the wireless-power receiving device. In some embodiments, the at least one electrical device is a controller (i.e. control panel / control hub / control device) for a security system. In some embodiments, the at least one electrical device is a device controlled by a controller for a security system.

In some embodiments the request to operate the system defines at least one operation being requested to be performed. For example, the at least one operation may be pre-programmed to be carried out after any successful authorization process or the identification information from the mobile device may be associated with a specific operation or specific operations to be carried out after a successful authorization process for that particular identification information.

In other embodiments the request to operate the system does not define any specific operations. In such embodiments, the at least one operation may be defined in a separate request transmitted to the remote device by the wireless-power receiving device via the wireless communications interface. The wireless-power receiving device may be configured to transmit said separate request after the request to operate the system. The wireless-power receiving device may be configured to transmit said separate request after the request to operate the system but no later than a defined time (e.g. no later than 30 seconds after transmitting the request to operate the system). In some embodiments, the wireless communications interface is powered for the transmission of the separate request using the energy received during said moment.

The mobile device may be held at (e.g. close to or adjacent to, but not necessarily touching) the wireless-power receiving device by a user. Accordingly, the wireless-power receiving device need not be configured to hold the mobile device (i.e. no mount, neither mechanical nor magnetic, is required to hold the mobile device).

In response to the action of the complementary coupling interface of the mobile device being held at the coupling interface (for example, for said moment), the wireless-power receiving device may perform a process for generating the request to operate the system. In some embodiments the process may comprise executing operations, e.g. as defined by embedded code instructions, that configure the wireless-power receiving device to transmit the request to operate the system in response to said action. For example, the process may be performed immediately after a commencement of said action. In other embodiments, the process may comprise, enabling a feature on the wireless-power receiving device, the feature comprising a user interface for receiving input from a user, the input comprising a selection for defining the at least one operation. In such embodiments, if and upon the user making such a selection, which optionally if being made must be made within a defined time, the process may further comprise transmitting the request to operate the system with the selection. For example, the selection may be defined in the request to operate the system, or in another embodiment, in a separate request that immediately follows the request to operate the system.

The remote device may be configured, in response to receiving the request to operate the system, to carry out an authorization process using the identification information from the mobile device. In the authorization process the remote device may determine based on the identification information from the mobile device whether the identification information from the mobile device corresponds to an authorized mobile device and/or to an authorized user.

In some embodiments, it may be implicit or explicit in the request to operate the system what operation(s) the system is to perform in response to receiving the request to operate the system. In some other embodiments the remote device may determine what operation(s) the system is to be performed based on the authorization and, optionally, other information stored at the remote device, for example based on an arming status of the security system stored at the remote device. In one example, if the arming status is fully armed or partially armed, the operation(s) may comprise disarming the system. This may be accompanied by the remote device transmitting a signal to the wireless-power receiving device instructing the wireless-power receiving device to indicate to a person that the system has now been disarmed. On the other hand, if the arming status is unarmed, the operation(s) may comprise firstly transmitting a signal to the wireless-power receiving device instructing the wireless-power receiving device to indicate to prompt a person to select whether they want to fully arm or partially arm the system. In response to receiving a selection from a user, e.g. via a button on the wireless-power receiving device, the wireless-power receiving device may transmit a signal to the remote device to enable the remote device to change the arming status in accordance with the selection.

In some other embodiments, the remote device may be configured, in response to receiving the request to operate the system and said selection, to generate an authorized operation signal for carrying out an authorized operation conditional upon the identification information from the mobile device being determined to correspond to an authorized user.

In some embodiments an authorized operation may, for at least one type of operation, be carried out by at least the remote device, for example where the authorized operation is to change an arming state of the system (which may be a change in respect to a part of the system or all of the system), the remote device may change a current arming state parameter stored on the remote device, and in some embodiments may communicate the change in arming state with one or more other electrical devices of the system.

Optionally for at least one operation type the authorized operation signal may be transmitted from the remote device to another electronic device to perform the operation. For example where an authorized operation is to open an access point (e.g. a door), the remote device may transmit the authorized operation signal to an actuation device for opening the access point. In some embodiments, the transmission of the authorized operation signal to the actuation device is conditional upon the arming state (e.g. it is transmitted if the arming state was first set to unarmed).

In some systems the remote device may be a controller installed at the premises, and optionally the authorized operation signal is to be performed by an electrical device of the system to which the controller is not able to directly communicate, but which can be communicated with by a remote server, for example using an IP address. In such embodiments, the controller may transmit the authorized operation signal to the server that in turn transmits a corresponding command signal to the electrical device (e.g. using the IP address of the electrical device) to perform an authorized operation.

In other systems, the remote device additionally or alternatively transmits a system request to a server to enable the server to authorize the operation and transmit an authorization signal, such as an authorization signal described herein. Authorization by the server may be dependent on the identification information from the mobile device and/or wireless-power receiving device identification information.

The wireless-power receiving device is preferably installed at a fixed location at the premises. In some embodiments the remote device may store location identification information for identifying the location of the wireless-power receiving device (e.g. which part of a premises the wireless-power receiving device is in). In other embodiments the location identification information be stored at a remote server. However, in either case, the remote device may store location identification information for distinguishing the location of that wireless-power receiving device from any other wireless-power receiving devices from which the remote device may receive signals.

The moment may be defined as being at least a minimum time. The minimum time may in some embodiments be no more than 5 seconds or no more than 3 seconds, or no more than 2 seconds, or no more than 1 second. The minimum time may be no less than 0.5 seconds.

The energy received during said moment may be stored in an energy storage unit. The energy storage unit is in some embodiments not a battery. The energy storage unit may comprise or consist of one or more capacitor devices. The one or more capacitor devices may comprise or consist of one or more super-capacitors.

The wireless-power receiving device may comprise an RFID tag or a Qi receiver. In some embodiments, the wireless-power receiving device may, more particularly, comprise an RFID tag.

The RFID tag may be configured for receiving the energy and in some embodiments also the identification information from the mobile device. Similarly, the Qi receiver may be configured for receiving the energy and in some embodiments also the identification information from the mobile device.

The mobile device may comprise an RFID reader or a Qi charger. In some embodiments, the mobile device may, more particularly, comprise an RFID reader.

The first antenna may comprise a coil for receiving at least said energy by inductive coupling, e.g. using Qi or NFC. Optionally the wireless-power receiving device may be configured to receive the identification information from the mobile device via the first antenna, e.g. likewise by inductive coupling, e.g., Qi or NFC may be used for both the receiving of the energy and the receiving of the identification information from the mobile device.

In other embodiments, the coupling interface may comprise a second antenna and may be configured to receive the identification information from the mobile device using the second antenna. With such embodiments, the identification information from the mobile device may be received using a different protocol to said energy, the different protocol being applied in respect of different signals for the energy compared with the identification information from the mobile device, for example Qi or NFC may be used for the energy and BlueTooth (e.g. BLE) may be used for the identification information from the mobile device.

In embodiments having said second antenna, the antenna that is different to said first antenna may be said second antenna, or the antenna that is different to said first antenna may in other implementations be a third antenna that is not the second antenna. Optionally the third antenna may be part of a different transceiver to a transceiver that includes the second antenna.

The identification information from the mobile device may be or comprise any unique information that is provided by the mobile device. For example, it may comprise at least one or both of: unique identification information for uniquely identifying the mobile device (e.g. a RFID tag serial number, a Qi receiver serial number, or some other serial number); and unique user identification information for uniquely identifying a user of the mobile device (e.g. a unique username).

The authorized operation(s) may be associated with the wireless-power receiving device. For example, the operation(s) may be determined based at least in part on wireless-power receiving device identification information for identifying the wireless-power receiving device and that may be included in the request to operate the system. For example, if a premises has multiple wireless-power receiving devices, then the operation(s) may be dependent on which wireless-power receiving device the mobile device is held at. In implementations in which only a single wireless-power receiving device is installed at the premises, or where the authorized operation(s) to be performed is the same regardless of which of a plurality of wireless-power receiving devices the mobile device is held at, then it may be unnecessary to include the wireless-power receiving device identification information in the request to operate the system. The wireless-power receiving device identification information may be unique identification information which may in some embodiments depend on hardware (e.g. a serial number) in the wireless-power receiving device. In other embodiments the wireless-power receiving device identification information may be based on a configuration programmed into the wireless-power receiving device, for example a unique address or network ID of the wireless-power receiving device used by a wireless communications protocol by which the wireless-power receiving device communicates to the remote device the identification information from the mobile device.

As will be appreciated by a person skilled in the art, the holding for the moment may consist of or comprise an action of tapping the mobile device on the wireless-power receiving device, but need not require the mobile device to physically touch the wireless-power receiving device.

Controlling a security function for the premises may comprise one or more of controlling access to the premises or a part thereof, and/or controlling an arming state of an alarm system or part thereof for the premises.

The system may further be configured to control operation of one or more non-security devices for the premises, for example, one or more of lighting, and/or home appliances.

In accordance with a fourth aspect of the disclosure there is provided a wireless-power receiving device configured for installation at a fixed location on a premises and for use in a method of requesting operation of a system configured to control at least a security function for a premises, the wireless-power receiving device comprising:
a coupling interface wirelessly configured to receive energy and identification information from a wireless-power transmitting device in the form of a mobile device having a complementary coupling interface, whereby the wireless-power receiving device is configured such that the energy and identification information is conveyed from the wireless-power transmitting device automatically by and upon an action of the complementary coupling interface being held at the coupling interface, the coupling interface comprising a first antenna for receiving at least said energy;
a wireless communications interface having an antenna that is different from said first antenna, wherein the wireless communications interface is configured to use energy received from the wireless-power transmitting device by said action to power the wireless-power receiving device and to transmit, to a remote device, a request to operate the system based on the identification information from the mobile device.

Embodiments of the disclosure therefore relate to a method of requesting operation of a system wherein the wireless-power receiving device itself, and not a mobile device, is configured to transmit a request to operate the system, to a remote device. One advantage of this may be that if the mobile device (e.g. a user's mobile phone) is unable to communicate with its associated telecommunications network, e.g. due to a problem accessing a cellular network, operation of the system can still occur. Further, the wireless-power receiving device installed at the premises can be preconfigured to communicate with the remote device using proprietary or other communication protocols that the mobile device may not, or may not readily, be able to implement.

The remote device may be constituted by a controller at the premises, the controller being configured to control at least a security function for a premises. When the request to operate the system is received by the controller, the controller itself may carry out the operation. In some embodiments, even if the controller receives the request to operate the system directly from the wireless-power receiving device, the controller may be configured to transmit the request to operate the system to a server and the server may carry out the operation. In other embodiments, the controller may communicate with the server after an operation has been authorized by the controller, for the server to then carry out or instruct another device to carry out the operation. The controller may be configured to communicate with the server, for example, over a cellular network connection, an Ethernet connection or a WiFi connection. In some embodiments, the controller may be configured to communicate with the server over a primary communication channel and one or more backup communication channels. The controller may have a more reliable primary communication channel and/or backup communication channel when compared to a mobile device.

In some embodiments, the server may be located remotely from the premises and may be accessed for example by the controller via a Wide Area Network (WAN), e.g. the Internet. The server may be configured to operate (e.g. by transmitting a command to) one or more electrical devices at the premises (e.g. where the electrical device is directly addressable on the WAN, e.g. using an IP address of the electrical device) or may be configured to communicate with the controller at the premises to operate the electrical device by a command to the controller based on which the controller may wirelessly transmit a corresponding command to the electrical device, e.g. over a separate network to the WAN. The one or more electrical devices may comprise at least one electrical device that is not the wireless power receiving device.

Because the mobile device serves to power the wireless-power receiving device, the wireless-power receiving device can be passive meaning no power supply (e.g. battery or connectors or cables for receiving power over wires from an external device or power source) is required by the wireless-power receiving device. This makes installation and/or maintenance of the wireless-power receiving device simpler and less costly.

In any case, since no battery replacement is needed, it may be simple to make the wireless-power receiving device waterproof. For example, the wireless-power receiving device may be irreversibly sealed, e.g. using ultrasonic welding, by an irreversible sealing snap fit, or by an adhesive, etc.

The wireless-power receiving device may be further configured to provide indications to a user via light and/or sound. For example, the wireless-power receiving device may comprise one or more LEDs and/or buzzers.

The wireless-power receiving device may be further configured to receive input from a user via a user interface on the wireless-power receiving device. For example, the wireless-power receiving device may comprise one or more buttons (e.g. an ARM and/or DISARM button). Consequently, the wireless-power receiving device may perform tasks not usually associated with a passive tag device. For example, in embodiments herein the wireless-power receiving device may constitute a control terminal (e.g. an access control terminal).

The wireless communications interface may be configured to transmit wireless-power receiving device identification information in the request to operate the system, to the remote device, to enable an authorized operation to be associated with the wireless-power receiving device. In other embodiments, for example, where only a single wireless-power receiving device is provided in a premises, it may not be necessary to transmit wireless-power receiving device identification information.

The identification information received from the mobile device may comprise user identification information for a user logged onto the mobile device. Providing user identification information allows a user to be authorized rather than the mobile device itself. This allows an authorized user to have multiple devices, potentially without the need to register all of the devices.

The identification information received from the mobile device may comprise a device identifier for the mobile device which is unique to the mobile device. Providing a device identifier that is unique to the mobile device allows a mobile device to be shared amongst authorized users.

Carrying out an authorization process, for example, in response to the request to operate the system, may comprise querying a register of authorized mobile devices or mobile device users using the identification information received from the mobile device.

The user identification information may be associated with one or more mobile devices.

The register may comprise a plurality of users. Each user of the plurality of users may be associated with one or more user specific authorized operations. Providing users with specific authorized operations allows different users reading the same wireless-power receiving device to have different default operations associated with them. This may include restricting certain operations, such as limiting access within the premises, or preferential operations, such as initiating certain home automation devices, for example, switching on particular lights.

The request to operate the system may further comprise the wireless-power receiving device identification information and/or at least one operation being requested. Providing the wireless-power receiving device identification information and/or at least one operation, is one way of allowing the operation(s) in relation to a wireless-power receiving device to optionally be predetermined and possibly pre-programmed into the wireless-power receiving device for convenience.

The mobile device may a mobile phone. Interactions with the wireless-power receiving device may comprise communicating with the wireless-power receiving device using a near field communication protocol. NFC communications are widely available on mobile phones and a convenient way of having a user engage with the system.

The method may further comprise: the wireless-power receiving device communicating with the mobile device using the coupling interface, for example, to notify the mobile device when a request to operate the system has been acknowledged. In response to receiving the notification, the mobile device may communicate to the wireless-power receiving device using the coupling interface a request for at least one further operation to be carried out. The method may further comprise: the wireless-power receiving device transmitting a corresponding request to the remote device for the at least one further operation to be carried out.

Optionally, upon receiving notification that the request to operate the system has been acknowledged, the mobile device may automatically open an application, or in some embodiments a pop-up menu, on the mobile device to communicate the same.

The at least one operation may comprise an operation relating to the control of a security system of the premises and/or a door access system. The at least one operation may be one or more of: arming or disarming a security system associated with the fixed location; and controlling an electrical device within the premises.

The electrical device may comprise one or more of: an audio system; a video system; an actuator for operating a door or gate of the premises; and a lighting system. The actuator may be configured to open, close, lock and/or unlock the door or gate. The user identification information may comprise an association between a user-determined operation and the wireless-power receiving identification information.

The wireless-power receiving device may be configured to transmit at least one wireless-power receiving device stored operation to the remote device.

The method may further comprise: the mobile device configuring the wireless-power receiving device with the at least one wireless-power receiving device stored operation. Providing a configurable predetermined operation in the wireless-power receiving device provides flexibility in the system. The wireless-power receiving device identification information may be associated with a predetermined operation stored in a memory of the wireless-power receiving device, mobile device, on-premises controller or off-premises server.

In embodiments using a server, providing a server to receive and carry out the operation provides more versatility in the system. This is particularly so where the server is a remote server and capable of managing different premises and user groups. It is also advantageous where the control system utilizes push (or other) notifications which are managed by the server.

The method may further comprise: determining at least one operation using at least one of: the wireless-power receiving device identification information and the identification information from the mobile device. The method may further comprise: obtaining, by the server, a wireless-power receiving device register comprising wireless-power receiving device identification information for a plurality of wireless-power receiving devices.

Also disclosed is a method of authorizing at least one operation of an electrical device in a premises using a wireless-power receiving device and a computing system comprising a controller and/or a server, comprising: the wireless-power receiving device: receiving, from a mobile device, identification information; and transmitting a request to operate the system to the computing system, the computing system, in response to receiving the request to operate the system, carrying out an authorization process before the at least one operation is initiated and wherein the request to operate the system comprises at least the identification information from the mobile device; and the computing system: receiving the request to operate the system; and carrying out the authorization process to determine whether at least one of a mobile device or a user of the mobile device associated with the identification information from the mobile device is authorized to be associated with the request to operate the system. The at least one operation may be associated with the wireless-power receiving device. The method may comprise transmitting an authorized operation signal for commanding the electrical device to carry out the at least one operation, or a part thereof, following affirmation of the authorization request. In some embodiments, the electrical device may be constituted by the controller or the server such that the at least one operation is carried out by the controller or the server after affirmation of the authorization request.

The at least one operation may be associated with one or more of: arming or disarming a security system associated with the premises; and controlling an electrical device within the premises. The at least one operation may be determined on the basis of the wireless-power receiving device and/or the identification information from the mobile device.

The system may further comprise a plurality of wireless-power receiving devices located at one or more fixed locations at the premises. The or each wireless-power receiving device may be located proximate to an entrance of the premises.

The system may further comprise: a security system, wherein the at least one operation relates to operation of the security system. The at least one operation may comprise arming or disarming the security system.

The system may further comprise one or more electrical devices, wherein the at least one operation relates to operation of one of the one or more electrical devices. The one or more electrical device may comprise one or more of: an audio system, a video system; an actuator for opening, closing, locking or unlocking a door or gate of the premises; and a lighting system.

The system may further comprise the mobile device. The mobile device may comprise an RFID reader or a Qi charger for providing said energy, and said identification information from the mobile device, to the wireless-power receiving device. The mobile device may be or comprise a mobile phone. For example, the mobile device may be a smart phone.

The wireless-power receiving device may comprise an adhesive for adhering the wireless-power receiving device to a fixed location. Providing an adhesive backing makes the installation of the wireless-power receiving device straightforward and user-friendly, particularly for a lay person.

The system may further comprise the premise at which the wireless-power receiving devices are installed.

Also disclosed is a computer program that, when read by one or more electronic processors, causes performance of any of the methods disclosed herein.

Also disclosed is at least one non-transitory storage medium comprising electronic-processor readable code that, when read by one or more electronic processors, cause performance of any of the methods disclosed herein.

Also disclosed is a mobile device configured to carry out any of the method steps relating to the mobile device disclosed herein.

Also disclosed is a controller configured to carry out any of the method steps relating to the controller disclosed herein.

Also disclosed is a server configured to carry out any of the method steps relating to the server disclosed herein.

The authorized operation may be associated with the wireless-power receiving device and the wireless-power receiving device identification information may be unique to that wireless-power receiving device.

The wireless-power receiving device identification information may be associated with a plurality of users, each of the plurality of users having a different authorized operation for the wireless-power receiving device.

The method may further comprise populating a register with one or more wireless-power receiving device entries, each of the wireless-power receiving device entries being associated with the wireless-power receiving device identification information from one or more wireless-power receiving devices; and associating a plurality of users with each of the wireless-power receiving devices in the register, wherein each user of the plurality of users is associated with a different authorized operation.

The authorized operation signal may be associated with one or more of: arming or disarming a security system associated with the premises; and operating an electrical device within the premises.

The server may comprise a register, the register comprising the wireless-power receiving device identification information for one or more wireless-power receiving devices and an associated authorized user and/or authorized operation(s) for the wireless-power receiving device identification information for each of the one or more of the wireless-power receiving devices.

Each wireless-power receiving device may be associated with a plurality of authorized users and at least one authorized operation for each of the plurality of authorized users, wherein the at least one authorized operation is different for different users.

The register may be amendable by a user such that the authorized user and/or authorized operation for each wireless-power receiving device of the one or more wireless-power receiving devices may be configurable.

The authorized operation may comprise one or more of: arming or disarming a security system associated with the premises; and operating an electrical device within the premises.

Also disclosed herein is a wireless-power receiving device for use with a system for authorizing an operation for controlling an electrical device in a premises using a mobile device, wherein the wireless-power receiving device comprises unique identification information which is associated with one or more authorized operation(s) and/or one or more authorized users.

The unique identification information may comprise: a serial number or other hardware ID. The unique identification information may be write protected in a memory of the wireless-power receiving device, such that it cannot be erased or re-written at the premises.

Also disclosed herein is a wireless-power receiving device for use with a system for authorizing an operation for controlling an electrical device in a premises using a mobile device, wherein the wireless-power receiving device comprises a predetermined operation, wherein the predetermined operation is write protected to prevent the operation being rewritten.

Also disclosed is at least one non-transitory storage medium comprising one or more registers, each of the one or more registers comprising wireless-power receiving device identification information corresponding to one or more wireless-power receiving devices, wherein each of the one or more wireless-power receiving devices is associated with a plurality of authorized users and at least one authorized operation for each of the plurality of authorized users, wherein the at least one authorized operation is different for different users.

In each of the above aspects and embodiments of the invention, there is preferably also authentication of the mobile device or the wireless power receiving device, more preferably authentication of both.

Whereas authorization may be understood as being whether a particular ID has been granted certain rights, authentication may be understood, for example, as a verifying that information (in this case the particular ID), purportedly from a particular source, does in fact come from that source.

Any known authentication techniques may be used to achieve the authentication.

In a specific example, the wireless power receiving device may authenticate the mobile device by authenticating the identification information from the mobile device that is used for the authorization. The authentication may, for example, comprise the wireless power receiving device issuing a challenge to the mobile device, wherein a correct response by the mobile device indicates that the mobile device is authentic. Additionally or alternatively cryptography may be used. For example, a private key of the mobile device may be used to sign the identification information that it provides to the wireless power receiving device, and the wireless power receiving device may authenticate the mobile device using a public key of the mobile device. Optionally, authentication may be achieved using an authentication tool available by the wireless communication protocol (e.g. NFC or Qi) employed to convey the identification information from the mobile device to the wireless power receiving device.

In a specific example, the remote device may authenticate the mobile device, for example using one of the techniques referred to above or any other technique. Additionally or alternatively, the remote device may authenticate the wireless power receiving device. This may be achieved, for example by authenticating the wireless power receiving device identification information, if provided by the wireless power receiving device to the remote device. The authentication may, for example, comprise the remote device issuing a challenge to the wireless power receiving device, wherein a correct response by the wireless power receiving device indicates that the wireless power receiving device is authentic. Additionally or alternatively cryptography may be used. For example, a private key of the wireless power receiving device may be used to sign the wireless power receiving device identification information, and the remote device may authenticate the wireless power receiving device 512 using a public key of the wireless power receiving device.

The skilled person will appreciate that except where mutually exclusive, a feature described in relation to any one of the aspects, examples or embodiments described herein may be applied to any other aspect, example, embodiment or feature. Further, the description of any aspect, example or feature may form part of or the entirety of an embodiment of the invention. Any of the examples described herein may be an example which embodies the invention defined by the claims and thus an embodiment of the invention.

As used herein, except where the context requires otherwise, the terms "comprises", "includes", "has", and grammatical variants of these terms, are not intended to be exhaustive. They are intended to allow for the possibility of further additives, components, integers or steps.

### Brief Description of the Drawings

The invention will now be described, by way of example only, with reference to the accompanying drawings, in which:
FIG. 1 shows a schematic representation of a control system;
FIG. 2 shows a schematic representation of another control system;
FIG. 3 shows a method of operating a control system from the perspective of a wireless-power receiving device;
FIG. 4 shows a method of operating a control system from the perspective of a controller;
FIG. 5 shows a flow diagram showing some operational steps of a control system implementing a first method;
FIG. 6 shows a flow diagram showing some operational steps for a control system implementing a second method;
FIG. 7 shows a flow diagram showing some operational steps for a control system implementing a third method;
FIG. 8 shows a flow diagram showing some operational steps for a control system implementing a fourth method;
FIG. 9 shows a flow diagram showing some operational steps for a control system implementing a fifth method;
FIG. 10 shows a flow diagram showing some operational steps for a control system implementing a sixth method;
FIG. 11 shows a flow diagram showing some operational steps for a control system implementing a seventh method;
FIG. 12 shows a flow diagram showing some operational steps for a control system implementing an eighth method;
FIG. 13 shows a flow diagram showing some operational steps for a control system implementing a ninth method; and
FIG. 14 shows a flow diagram showing some operational steps for a control system implementing a tenth method.

### Detailed Description

The present disclosure is concerned with providing a convenient method of operating a system configured to control at least a security function for a premises, and wherein a wireless-power receiving device is configured to, upon wirelessly receiving power, receive identification (ID) information from a mobile device, such as a mobile phone, and communicate the identification (ID) information to a remote device (e.g. a control panel/control hub or other controller) in order to request operation of the system.

The request for operation of the system may define one or more operations that are being requested to be performed. Alternatively, an operation to be performed by the system may be determined by a device that receives the request, either initially or after subsequent communication of the request.

The request to operate the system may comprise an authorization request. The remote device may in response to receiving the request to operate the system determine whether a user associated with the identification information from the mobile device is authorized to operate the system.

The request to operate the system may result in an operation to change an arming state of the system. Additionally or alternatively, the remote device may transmit a request to an electrical device to perform an operation or a part thereof.

One or more wireless-power receiving devices may be located at strategic locations around a premises, such as building entry points and/or one or more parts of the building. Providing such wireless-power receiving devices which are powered by a mobile device allows a user to approach a premises and engage with an access control or security system without having to interact with an interface of the mobile device. Thus, the mobile device can be used to cause the wireless-power receiving device to communicate the identification (ID) information from the mobile device to a remote device in order to initiate operation of the system.

Using a mobile device and a wireless-power receiving device allows a convenient control system to be provided which can optionally be readily configured for a particular premises and according to specific user requirements, both of which can vary tremendously from application to application. Thus, a user or owner of a premises may install a plurality of task specific wireless-power receiving devices at desired locations at a premises and allow a mobile device which is associated with a user to initiate the respective task operations. Alternatively or additionally, a user or owner of a premises may be able to configure the system such that a wireless-power receiving device is associated with a location and the user specific task operations are carried out when a given user, associated with a mobile device, powers and communicates to the wireless-power receiving device at that location.

Such a system provides an improved control system which is relatively inexpensive to install and configure.

In contrast to the above, prior art systems generally require some form of user interface engagement with a mobile device, or involve installed active/powered RFID reading devices which are costly to install and maintain.

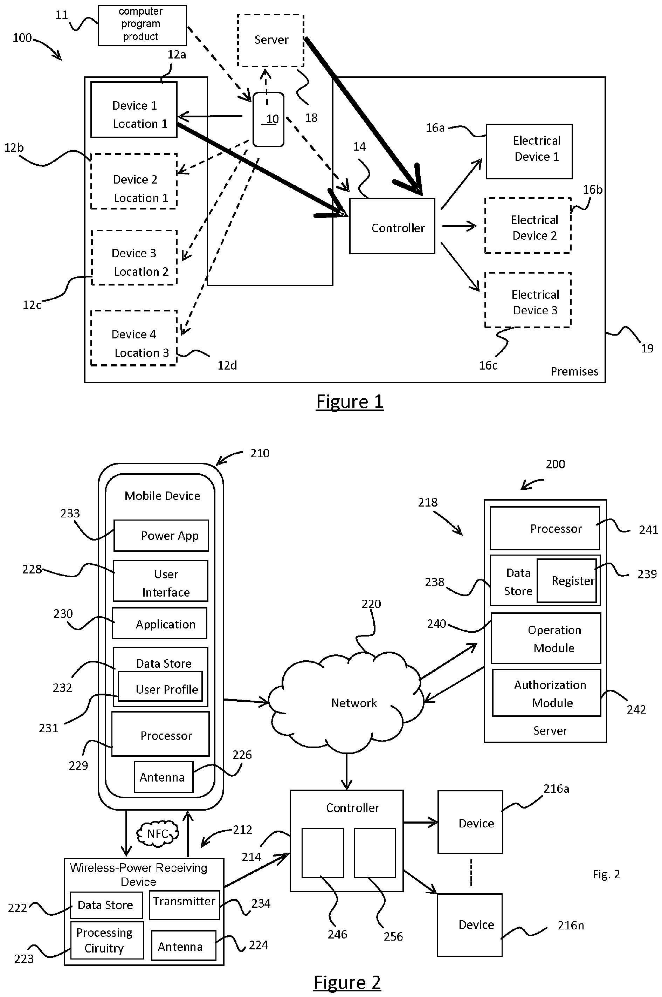

Figure 1 shows a schematic representation of a control system 100 comprising: a mobile device 10; a premises 19; one or more wireless-power receiving devices 12a-d located at predetermined locations around and/or in the premises 19; a server 18; a controller 14; and one or more electrical devices 16a-16c. The elements shown as dashed lines are optional elements of the system. Thus, the system may comprise a single wireless-power receiving device 12a, a mobile device 10, a controller 14, a single electrical device 16a and a premises 19 and may not require the use of a server 18. The arrows generally show a transmission of data from one entity to another.

The control system 100 may be an access system, a security system and, optionally, a home-automation system, for example. Thus, the control system 100 may be configured such that a user carrying a mobile device 10 can control one or more electrical devices 16a-c which relate to aspects of an access system, a security system and, optionally, a home automation system, for example. It will be appreciated that by home automation, it is meant that the one or more electrical device 16a-c within the system 100 may relate to one or more audio/visual, lighting devices or other remotely controlled device within the premises 19. It will also be appreciated that the control system 100 may be additionally employed in other applications not covered by security, access or home automation systems.

The premises 19 may comprise a building. The building may be a dwelling such as a house, an apartment or block of apartments, for example. The premises 19 may comprise a commercial or industrial building such as an office, storage facility, shop, factory, restaurant or other public amenity building, for example. The premises 19 may include the grounds which surround the building such as a garden, driveway, or car park, and may include one or more outbuildings. Thus, the premises 19 may be defined as the curtilage of a property which includes the grounds and any buildings therein in some examples, or be restricted to one or more buildings, or parts of a building, in other examples.

A security system may be installed at the premises such that the premises 19 may comprise a security system. The security system may be a conventional security system in many respects and may comprise one or more of: a door access system; an alarm beacon or sounder; a motion detector for detecting the presence of an intruder or user of the premises 19; a security camera; a sensor(s) for detecting opening of a respective door/window and, a break-glass detector, for example. The door access system may comprise, for example, one or more remotely operated locks or latches which allow a user to unlock and/or open a door without physically engaging with the door, for example, by using a mechanical key or handle. The door access system may comprise one or more electrically controlled locks, which may employ magnetic or motor-driven latches, for example.

The premises 19 may include one or more wireless-power receiving devices 12a-d provided at one or more locations on the premises. As shown in Figure 1, there are four wireless-power receiving devices 12a-d distributed between three separate locations, with wireless-power receiving devices 12a and 12b being at a common location, `location 1'. The locations may include entry points to a building or part thereof, such as a doorway or vehicular garage for example, or entry points to the curtilage such as a pedestrian or vehicular gate.

The operations initiated by the system 100 may be location specific. For example, a first wireless-power receiving device 12a provided at a first door entry point at location 1 may be used to receive power and identification (ID) information from a mobile device, and to communicate the identification (ID) information to a remote device (e.g. a control panel/control hub or other controller) in order to request operation of the system. The result of the operation may be unlocking the door at the first door entry point and/or switching on a light or camera at that location, for example. An operation in relation to a third wireless-power receiving device 12c provided at a second door entry point at location 2, may result in the door at the second door entry point being unlocked.

As noted above, a first door entry point may include two wireless-power receiving devices 12a, b, each of which may be associated with a different operation (e.g. action). The operations may be predetermined and application specific but may, for a security system, include: 'arm security system' and 'disarm security system' and/or arm/disarm a part of a security monitoring system that is associated with the first door entry point. Thus, a user can operate the 'arm' wireless-power receiving device 12a when leaving the building, or 'disarm' wireless-power receiving device 12b when entering the building. Other examples of task specific wireless-power receiving devices may include 'lock' and 'unlock' for an access system, or 'activate' or `deactivate' select devices as part of a home automation system; or toggle any one of an arming state, lock state or activation state, e.g. switch to armed if currently disarmed or to disarmed if currently armed.

An advantage of the system and method described herein, is that providing different wireless-power receiving devices 12a-d which can be configured to provide predetermined generic operations or location specific operations, allows a user or premises owner to install different wireless-power receiving devices at different locations to best suit that premises or a user group associated therewith. It will be appreciated that the system and method described herein also allows the premises to be segregated into zones or areas. Each of the zones or areas may have specific user access rights and/or dedicated wireless-power receiving devices associated with them, such as restricted locations within a commercial building or sub-dwellings within a communal residential block, for example.

The mobile device 10, may be any suitable mobile device 10 which can be configured to power the one or more wireless-power receiving devices 12a-d. The mobile device 10 may be configured by instructions received from a computer readable data carrier, such as an app store, carrying the instructions in the form of a computer program product 11.The computer program product 11 configured such that, when executed by at least one processor of the mobile device 10, causes the mobile device 10 to convey power and data to the one or more wireless-power receiving devices 12a-d. The mobile device 10 may be: a mobile phone, such as a: smart phone; a tablet; a wearable device such as a smart watch; laptop; or, any other electronic device which a user may carry on their person when entering or exiting the premises 19.

The mobile device 10 will include identification information which can be used to verify that the mobile device 10, or the user thereof, is authorized to carry out a requested operation and/or action associated with a wireless-power receiving device 12a-d. The identification information may include information linking the mobile device 10 to a user. The identification (ID) information from the mobile device 10 may include an encrypted key or other suitable identifier which is associated with the user and/or user credentials of the mobile device 10 such as a username and password. Thus, the authorized operations which are permitted for that user or mobile device 10 can be initiated once the identification information is received and verified by a remote device such as the controller 14 or server 18. It will be appreciated that the mobile device may be one of a plurality of devices which an authorized user may use to operate a wireless-power receiving device 12a-d. Further, it will be appreciated that various users may have access to a common mobile device 10. Hence, in some examples, the identification (ID) information from the mobile device 10 may include both mobile device credentials and user credentials.

The mobile device credentials may include a serial number or other unique number which may relate to a piece of installed software or hardware. Alternatively, or additionally, the mobile device 10 may comprise a security token that is issued to the mobile device 10, e.g. when an app is installed or a system installed and/or commissioned. Hence, the identification (ID) information from the mobile device 10 may be something stored in a memory, such as an EEPROM.

The mobile device 10 may be configured so as to require a user to unlock the mobile device 10 using one or more mobile device 10 security features prior to the powering and resulting operation of the wireless-power receiving device 12a-d. The security features may comprise well-known features currently used on mobile devices such as login information including one or more of a username, password and security key, or biometric sensors such as facial, iris or fingerprint recognition sensors. Restricting the transmission of the identification (ID) information from the mobile device 10 to instances where the mobile device 10 has been unlocked by an authorized user using suitable security measures may prevent access by unauthorized users who have obtained the mobile device 10 illegitimately.

The mobile device 10 may be configured to power the wireless-power receiving device 12a-d such that, upon or after receiving power and the identification (ID) information from the mobile device 10, the wireless-power receiving device 12a-d may transmit the identification (ID) information to a remote device (e.g. the controller 14) in order to request operation of the system, wherein the request operation of the system comprises an authorization request. The authorization request may be received by or relayed to an authorization module. The authorization request may comprise the identification (ID) information from the mobile device 10 and may cause the authorization module to carry out an authorization process using the identification (ID) information from the mobile device 10. In some embodiments, the authorization process may constitute the requested operation of the system. In other embodiments, the requested operation may comprise the authorization process and at least one operation initiated on successful completion of the authorization process.

Upon successfully executing the authorization process and verifying the identification (ID) information from the mobile device 10, at least one operation may be initiated with one or more of the electrical devices 16a-c. The authorization module may be server 18 based, or provided as part of the system controller 14 which may be remotely located or located within the premises 19 respectively. Providing the authorization module as part of a server may be advantageous where: multiple premises or user groups require access, and/or where push notifications relating to the activity or status of the system 100 are desirable. These advantages are explained in more detail below.

The mobile device 10 is configured to communicate with the wireless-power receiving devices 12a-d wirelessly as is known in the art. The communication between the wireless-power receiving device 12a-d and mobile device 10 may comprise any suitable transmission frequency and/or communication protocol, such as RFID or Qi. The mobile device 10 is provided with a complementary coupling interface for communication with coupling interface of the wireless-power receiving device 12a-d.

The choice of the transmission frequency or communication protocol may be determined or selected according to a desired range, that is, a maximum distance for the transfer of power and the identification (ID) information from the mobile device 10 to be reliably performed. In some examples, it may be advantageous to have a user undergo a defined action or carry out a specific gesture such as offering the mobile device 10 up to the wireless-power receiving device 12a-d for a moment which may be a predetermined length of time or by swiping the wireless-power receiving device 12a-d in a similar manner to a conventional passive door access key fob. Providing an affirmative action from the user of the mobile device 10, such as a presenting or swiping the mobile device 10 in relation to the wireless-power receiving device 12a-d, may help avoid accidental authorization requests and may help reduce unnecessary power consumption. It may also allow multiple wireless-power receiving devices 12a-d to be located in a common location or area.

The working range of the mobile device 10 may be less than 10cm or less than 4cm, for example. In some examples, the range may be greater than 3cm and less than 1 0cm, greater than 10cm and less than 1m, greater than 1m or less than 2m, or any combination of these ranges. The mobile device 10 may be configured to transfer power and identification (ID) information to the wireless-power receiving device 12a-d using different transmission frequencies and/or using different communication protocols so that a single mobile device 10 may be configured to work with different types of wireless-power receiving devices to allow the range to be selected as required.

In some examples, the mobile device 10 may be configured to transfer power and/or identification (ID) information to the wireless-power receiving device 12a-d using a near field communications, NFC, protocol which is a well-known protocol and typically operates in the range of around 10cm or less, or in some implementations, around 4cm or less.

The wireless-power receiving device 12a-d is configured to receive via a coupling interface and from the mobile device 10, identification information and energy for powering the wireless-power receiving device 12a-d. The coupling interface comprises a first antenna for receiving at least said energy and optionally also said identification information from the mobile device 10.

The first antenna may comprise a coil for receiving at least said energy by inductive coupling, e.g. using Qi or NFC. Optionally the first antenna may also be configured to receive the identification information from the mobile device 10 via the first antenna, e.g. likewise by inductive coupling, e.g., Qi or NFC may be used for both the receiving of the energy and the receiving of the identification information from the mobile device 10.

In other embodiments, the coupling interface may comprise a second antenna and may be configured to receive the identification information from the mobile device 10 using the second antenna. With such embodiments, the identification information from the mobile device 10 may be received using a different protocol to said energy, the different protocol being applied in respect of different signals for the energy compared with the identification information from the mobile device 10, for example Qi or NFC may be used for the energy and BlueTooth (e.g. BLE) may be used for the identification information from the mobile device 10.

The powering of a wireless-power receiving device 12a-d may cause the wireless-power receiving device 12a-d to provide information relating to the wireless-power receiving device 12a-d, which can be used to inform the server 18 and/or controller 14 what action or operation is required from the electrical devices 16a-c. Thus, for example, the wireless-power receiving device 12a may be associated with a particular location and/or a predetermined operation which causes a predetermined response from one or more of the electrical devices 16a-c when a request for operation is successfully processed by the system 100.

In some examples, the mobile device 10 may be configured to open an application on the mobile device 10 in response to powering the wireless-power receiving device 12a-d, or display a push notification to the, or another, user. Alternatively, or additionally, the mobile device 10 may be configured to open an application or display a notification to a user of the mobile device 10 upon the requested operation being completed, acknowledged or authorized by the remote device, for example, via an acknowledgement transmitted from the remote device to the wireless-power receiving device 12a-d, and then from the wireless-power receiving device 12a-d to the mobile device 10. The application and/or push notification may be configured to initiate an interaction with the user or with another user. For example, the application and/or push notification may provide a number of possible operations from which a user can select, such as arm/disarm or lock/unlock. Other users may include any other individual or organization who has an interest in activity associated with the control system or the status of the control system. For example, another user may comprise a security service or personnel responsible for the premises 19, or an owner of the property who wishes to have a monitoring service to understand the comings and goings of family members, employees, tenants, visitors or other people to property.

The wireless-power receiving device 12a-d may include wireless-power receiving device identification information which relates to the location where they are installed and/or a predetermined operation for transmission to the remote device upon being powered. For example, a wireless-power receiving device 12a-d may be configured to transmit a request for a desired operation to the controller 14 such as 'arm' or a 'disarm' such that, when the wireless-power receiving device 12a-d in question is powered, the wireless-power receiving device 12a-d can relay a request for arming or disarming a component of the system, such as one or more security aspects of the server 18 or controller 14 of the premises 19, which is subsequently armed or disarmed. Other operations may include locking or unlocking a door, latching or unlatching a door, activating or deactivating a camera, lighting or audio/visual equipment, amongst others. Providing pre-programmed operations is advantageous as it reduces the configuration required for the system 100 during installation. Further, it also allows the wireless-power receiving device 12a-d to be clearly marked such that a user of the mobile device 10 can select an operation by sight alone and avoid any further interaction with the mobile device 10 to initiate a particular operation.

Alternatively or additionally, the wireless-power receiving device identification information may relate simply to an identification number which can be assigned to a particular location or operation within the system 100, the assignment being recorded in the memory of the server 18 and/or controller 14.

The wireless-power receiving device 12a-d may be configured to be installed by an end user and may, for example, comprise one or more features for attaching the wireless-power receiving device 12a-d to a wall or other suitable support structure at a desired installation location. In one example, the wireless-power receiving device 12a-d may be provided with a suitable adhesive backing by which an end user can adhere the wireless-power receiving device 12a-d to at an appropriate location.

Providing wireless-power receiving devices 12a-d enables them to be readily installed by an end user without any need to route wiring for powering or communication. Additionally, the system may be configured as required for a particular premises or purpose, and/or may utilize a range of pre-configured wireless-power receiving devices 12a-d for different locations and operation to simplify set-up and/or offer greater control over the systems functionality. Further the use of wireless-power receiving devices 12a-d can reduce the size and cost of the components of the system 100, and can improve reliability and/or reduce any need for servicing.

The wireless-power receiving devices 12a-d may be reconfigurable such that the wireless-power receiving devices 12a-d can be updated after being installed at the predetermined location of the premises 19. Reconfiguring the wireless-power receiving devices 12a-d may include assigning new identification information or operations to the wireless-power receiving devices 12a-d or simply updating the wireless-power receiving devices 12a-d to improve security or the like.

As noted above, the communication between the wireless-power receiving devices 12a-d and mobile device 10 may comprise any suitable transmission frequency or protocol, known in the art. Thus, the wireless-power receiving devices 12a-d may be arranged to communicate on a particular transmission frequency or using a particular communication protocol, and wireless-power receiving devices 12a-c allocated may be configured to communicate on the same or different transmission frequencies or protocols so as, for example, to allow different operations to be initiated by different types of mobile devices 10 which support different communication protocols.

Providing installable wireless-power receiving devices 12a-d as part of a control system 100 for a premises 19 allows the system to be readily and inexpensively configured such that control of various electrical devices 16a-c can be accomplished without a user having to interact with their mobile device 10. Further, the system 100 can be highly configurable by using task specific wireless-power receiving devices 12a-d.

Each wireless-power receiving devices 12a-d may, in some embodiments, be provided by an NFC device that is operable to act, at minimum, as a wireless-power receiving device. The installed NFC device(s) may optionally also be operable in other ways, but such functionalities are not utilized by the installed NFC device in the described embodiments.

The one or more electrical devices 16a-c may be arranged within the premises 19 and may be configured to be controlled by the controller 14. The controller 14 may be a generic controller 14 which is configurable or programmable to allow for control of the electrical devices 16a-c or may be task specific. The controller 14 may comprise a single controller, or be a distributed controller comprising a plurality of task specific controllers, each of which are configured to control different aspects of the system 100. Thus, there may be a task specific controller associated with the security system 100 such as a security system control hub, as is known in the art. Additionally or alternatively, the controller 14 may comprise a task specific controller associated with a door access control system, as also known in the art. Further task specific controllers may relate to other equipment such as audio/visual equipment or lighting equipment.

The control of the electrical devices 16a-c may be caused by a request for operation of the system initiated by a mobile device 10 powering one or more wireless-power receiving devices 12a-d. The operation may be transmitted to the controller 14 or determined by the controller 14 on the basis of the identification (ID) information from the mobile device 10 and/or information associated with the wireless-power receiving device 12a-d.

The wireless-power receiving device 12a-d is configured to use energy received from the mobile device 10 by and upon an action of the complementary coupling interface of the mobile device 10 being held at the coupling interface of the wireless-power receiving device 12a-d, to power a wireless communications interface of the wireless-power receiving device 12a-d having an antenna that is different from the first antenna (which is configured for receiving at least said energy and optionally also said identification information from the mobile device 10).

In embodiments having said second antenna, the antenna that is different to said first antenna may be said second antenna, or the antenna that is different to said first antenna may in other implementations be a third antenna that is not the second antenna. Optionally the third antenna may be part of a different transceiver to a transceiver that includes the second antenna.

The connection between the controller 14 and the wireless-power receiving device 12a-d will be wireless and achieved using conventional wireless transmission technology. Thus, the wireless-power receiving device 12a-d may communicate with the controller 14 via the internet, a wide area network, a wireless local area network, or short range wireless communications using known standards and/or protocols, such as TCP/IP, WiFi (RTM) or Bluetooth (RTM), for example. The controller 14 may be connected to each of the electrical devices 16a-c via any suitable network such as a wide area or local area network, or short range wireless communications which may be achieved wirelessly or may be via wired connections, as known in the art. The controller 14 or parts thereof may be located within the premises 19. For example, in some embodiments the controller 14 is a control hub installed at the premises. The control hub may more specifically communicate with the electrical devices 16a-c using a wireless personal area network (WPAN). In some embodiments the WPAN may be a low-rate wireless personal area network (LR-WPAN), which may operate in accordance with IEEE 802.15.4.

The server 18 may be configured to receive information from the mobile device 10 and/or the controller 14. The server may be configured to determine whether the mobile device 10 is authorized to request or initiate an operation on the basis of the identification (ID) information from the mobile device 10, which is relayed by the wireless-power receiving device 12a-d. The server may further be configured to obtain an operation which is to be carried out as a result of the request for operation transmitted by the wireless-power receiving device 12a-d. The operation may be one or more of: predetermined by the wireless-power receiving device 12a-d; predetermined based on the user credentials of the mobile device 10 or the identification (ID) information from the mobile device 10; and, selected by a user of the mobile device 10 using the mobile device 10. The selection of an operation and/or communication of an operation to the electrical devices 16a-c may be carried out by the server 18. The operation may be preassigned on the basis of the identification (ID) information from the mobile device 10 and/or identification (ID) information from the wireless-power receiving device 12a-d, or may be transmitted to the server 18 by the mobile device 10.

The server 18 may be configured to initiate the operation once an authorization request has been approved. In some embodiments this is achieved by the server 18 transmitting one or more operation requests to the controller 14. In response, one or more operations may be performed by the controller 14 and/or or by one of the electrical devices 16a-c under its control.

The server 18 may be a conventional server and may be located remotely from the premises 19. The server 18 may be cloud based, for example. The server 18 may be a single device or a plurality of distributed devices. The mobile device 10 may communicate with the server 18 using any suitable network such as the Internet or other wide area network or a local area network, for example. Thus, the mobile device 10 may communicate via the wide area network using broadband mobile or via a wireless connection to an access point at the premises 19, using WiFi, for example.

In addition to carrying out one or more of an authorization request and obtaining and communicating an operation to the controller 14, the server 18 may be configured to carry out other tasks associated with the premises 19. For example, the server 19 may be configured to provide security system functionality such as monitoring activity at the premises 19 via a security system and/or security system controller 14. This may comprise receiving data from the controller 14 relating to the security of the premises 19 and contacting responders and/or users when the security of the premises 19 is breached and an alarm triggered.

Further, the server 18 may be configured to manage user accounts. In some examples, the system 100, the controller 14, a wireless-power receiving device 12a-d or an electrical device 16a-c may be associated with one or more users or user groups. Further, each of the users and/or user groups may be associated with one or more premises 19. Each of the user groups may include one or more master users. The server 18, may be configured to associate different permissions for different users or members of the user groups and communicate the status of the system 100 and/or changes in the system 100 to the one or more master users. Thus, a master user may be registered with a server 18 as being a master user for each one of a plurality of premises 19 and may be determined to provide an authentication or permission.

It will be appreciated from the above description that the server 18 is located remotely from the premises 19 and accessible by various premises 19 via a common network. In contrast, the controller 14 is a local controller located at the premises 19 and in some embodiments is without the facility to be directly contactable by different premises 19.

The electrical devices 16a-c may relate to access control equipment for the premises 19, a security system for the premises 19, or other systems or equipment which are desirable for a user to activate or deactivate when entering (or exiting) the premises 19. Such electrical devices 16a-c may relate to audio visual equipment, lighting devices, an alarm beacon or sounder, one or more locks, and/or door-opening mechanisms for example. As will be appreciated from the description herein, other kind of electrical devices may also be used.

Figure 2 provides a more detailed view of a control system 200. The control system 200 of Figure 2 may include similar features to the control system 100 described in connection with Figure 1 and the description of some corresponding features may not be repeated below for the sake of brevity.

Figure 2 shows a control system 200. The control system 200 may comprise: a mobile device 210; a wireless-power receiving device 212; a controller 214; electrical devices 216a-n; and a server 218 that is accessible via a network 220.

The mobile device 210 may include one or more antenna 226 for external wireless communications and data transmissions; a display screen comprising a user interface 228 with which a user can interact with the mobile device 210 to receive data or input data relevant to the control system 200; one or more applications 230 which may be configured to receive inputs or provide outputs which are associated with the control system 200 and control of the electrical devices 216a-n; a power application 233 for controlling the transfer of power and identification (ID) information from the mobile device 210 to the wireless-power receiving device 212; a processor 229; a data store 232 which may store instructions which, when executed by the processor cause the performance of the method steps relevant to the mobile device 210; and a user profile 231.

As noted above, the mobile device 210 may be any mobile computing device which is carried by a user when exiting or entering a premises. In the case of Figure 2, the mobile device 210 is assumed to be a mobile phone in the form of a conventional smart phone which comprises conventional hardware and software to allow voice and text communications and data connections via various wireless communication channels such as mobile broadband, wireless local area networks, and short range wireless technologies such as near field communications and Bluetooth (RTM), for example. The mobile device 210 is also configured to store and operate other applications, 'apps', as known in the art.

The display screen may be a conventional touch screen which is configured to receive touch inputs from a user so as to allow the selection of screen items such as menus or buttons. The screen items may be provided as part of the user interface 228 which may include options for a user to select, as part of an application or a notification, provided on screen without a user request or operation other than powering the wireless-power receiving device 212. The notification may be a push notification and may be provided as an on-screen dialogue box or a dropdown menu.

The user profile 231, which may also be referred to as user identification information, may include one or more user credentials which allow a user to be identified. The user credentials may include a username or other identifier and possibly one or more passwords, for example, so that the user can be securely identified. The user profile 231 may also include a current status of the user and/or whether, for example, they are logged in to the phone when the wireless-power receiving device 212 was powered.

The presence of the user profile 231, including their log-in state, may be used, in some embodiments, to determine whether the user who has control of the mobile device 210 has the necessary authorization associated with a given request for operation of the system 200. For example, the control system 200, e.g. the server 218, may receive an authorization request from the controller 214, which relates to an operation for disarming a security system or unlocking an entrance door. As part of the authorization request process, the server 218 may be configured to establish who a currently logged in user is, and whether this user has permission to initiate the requested operation. Thus, the user profile 231, or data associated with the user profile 231, may be transmitted to the server 218 as part of an authorization request, following powering of the wireless-power receiving device 212.

Providing the user profile 231 may also allow a user to be validated for a mobile device 210 which is not known to the system 200. Thus, instead of authorizing an operation on the basis of the mobile device 210, it may be preferable to authorize an operation using only the user credentials. Thus, an authorization request may include identification (ID) information from the mobile device 210 which comprises the user credentials including a username or password, for example.

It will be appreciated that reference to a user profile 231 or user credentials may include data relating to the user profile 231 or user credential. Thus, the actual username or password of a user may not be transmitted as part of an authorization request, but data relating to the user may be transmitted once local security checks have been carried out on the mobile device 210 and the user identity confirmed.

In some embodiments, the user profile 231 may be stored in the server 218, with the stored user profile 231 including a unique identifier for one or more mobile devices 210 and/or an identifier of software serial numbers to which the user has access on the mobile device 210. The unique identifier may for example be a hardware identifier of the mobile device 210, e.g. MAC address. The software serial number may be unique to each instance of a software application installation. In such embodiments, the server 218 may identify the associated user of the mobile device 210 based on the received unique identifier associated with the mobile device 210.

The use of user profiles 231 may optionally be used to provide different levels of premises access and/or control over different sets of electrical devices 216a-n, dependent on the user.

In some examples, the users may form part of a user group or a user account. The users may be provided with different permissions for different controllers and/or different premises 19. Thus, for example, a first user account may include 'User1' and 'User2' which have authorization for operations in relation to a first controller 214. `User1' may additionally have authorization for operations in relation to a second controller, as may a User3. At a further premises, a second user account may comprise 'User1' and 'User5' who are authorized for operations in relation to a third controller, and a 'User4' who is authorized for operations in relation to a fourth controller. It will be appreciated that other combinations of users, controllers and premises may be possible.

The applications 230 may be task specific applications. There may be one or more of: a security system application, a door access application, a home automation application and a power application 233 for controlling the transfer of power and identification (ID) information from the mobile device 210 to the wireless-power receiving device 212. Any of these applications may be combined in a single application 230. Thus, there may be a security system application that is configured for controlling the transfer of power and identification (ID) information from the mobile device 210 to the wireless-power receiving device 212 for transmission of a request for operation (which may be or include a request for authorization) of the system to the control system 200, e.g. the server 218, accordingly. Alternatively, the power application 233 may be a separate application or a service of the mobile device's operating system.

The data store 232 may comprise one or more memories present in the mobile device 210. The one or more memories may comprise a non-transitory computer readable storage medium comprising computer readable instructions that, when read by a processor of a mobile device 210, configure the mobile device 210 to carry out the methods described herein. The computer readable instructions may comprise executable code relating to the one or more applications 230, for example.

Thus, the data store 232 may comprise one or more computer programs which, when executed by the mobile device 210, cause the performance of the methods described herein. The memory may comprise: volatile memory, for example, one or more dynamic random access (DRAM) modules and/or static random access memory (SRAM) modules; and/or non-volatile memory, for example, one or more read only memory (ROM) modules, which for example may comprise a Flash memory and/or other electrically erasable programmable read-only memory (EEPROM) device. In other embodiments the data store may be separate from the mobile device 210. For example, it may be located in a memory component of a remote server or a portable memory device such as a memory card, e.g. SD card or microSD (RTM). Alternatively, the data store may be distributed amongst a plurality of devices, for example, partly on the mobile device 210 and partly remotely.

The processor 229 may be a conventional mobile device processor which may include one or more microprocessors executed in hardware or software, for example. The processor may include at least one microprocessor and may comprise a single core processor, may comprise multiple processor cores (such as a dual core processor or a quad core processor), or may comprise a plurality of processors (at least one of which may comprise multiple processor cores). In various examples, the processor 229 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), and/or transceiver(s) to perform the methods.

As described above in connection with Figure 1, the mobile device 210 may be configured to transfer power and identification (ID) information from the mobile device 210 to the wireless-power receiving device 212 using any suitable communication protocol. The mobile device 210 of Figure 2 is shown as using a near field communication, NFC, protocol as is well known in the art. The use of NFC is convenient due to its prevalence on conventional mobile phones and other portable computing devices but is particularly advantageous to the present disclosure due to the mobile device 210 requiring a close proximity engagement with the wireless-power receiving device 212. The wireless-power receiving device 212 is therefore, in this embodiment, provided by an NFC device. This means that a plurality of wireless-power receiving devices 212, each with predefined tasks (e.g. arm/disarm), can be located relatively closely together at a strategic location on the premises 19, whilst allowing a user to select a particular operation by presenting the mobile device 210 at only one of the wireless-power receiving devices 212.

The wireless-power receiving device 212 may comprise: a data store 222, a first antenna 224 for communicating via a corresponding antenna 226 in the mobile device 210, a processor or processing circuitry 223 and a transmitter 234 for communication with the controller 214 to request operation of the system 200. The transmitter 234 will include an antenna that is different from the first antenna 224. Accordingly, the first antenna may be configured for communication with the mobile device 10 using a first protocol and the transmitter 234 may be configured for communication with the controller 214 using a second protocol.

In some examples, the wireless-power receiving device 212 may be configured to be re-programmable, as described above. Thus, the mobile device 210 may be configured to carry out a read/write function. Reconfiguring the wireless-power receiving device 212 may comprise changing a predetermined operation associated with the wireless-power receiving device 212, for example.

The wireless-power receiving devices 12a-d, 212, described herein may include unique identification information comprising, for example, a hardware ID or a serial number. The unique identification may be fixed such that it cannot be erased or re-written in the field. In this way, no two wireless-power receiving devices 12a-d, 212 from a given system 200, or any other, will have the same ID meaning each can be uniquely identifiable. Each unique ID may be placed on an authorization register 239 together with a user, an operation, or user specific operation, for that wireless-power receiving device ID.

The controller 214 may be a generic controller configured to control the operation of the electrical devices 216a-n, or may be task specific. Hence, although the controller 214 is a single item in the example shown in Figure 2, it is possible for the controller 214 to comprise a plurality of task specific controllers. Hence, there may be a first controller which is configured to control a security system or a door entry system. The controller 214 may comprise a further controller which is configured to control one or more of the electrical devices 216a-n used for audio or visual equipment or lighting, for example. Other controllers will be apparent to the skilled person.

The controller 214 or the sub-controllers thereof, may be collocated within a common location or housing within the premises 19, or may be distributed throughout.

The controller 214 may comprise any suitable circuitry to cause performance of the methods described herein and as illustrated in the drawings.

In various examples, the controller 214 may comprise at least one processor 246. For example, the controller 214 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), and/or transceiver(s) to perform the methods.

The controller 214 may also comprise at least one memory 256 that is separate from the processor(s) 246 and/or partly or wholly integrated onto a common chip(s) with the processor(s) 246. The at least one memory 256 may store code that, when read by the processor(s) 246, causes performance of any of the methods described herein, and/or as illustrated in in the drawings. For example, the memory 256 may comprise: volatile memory, for example, one or more dynamic random access (DRAM) modules and/or static random access memory (SRAM) modules; and/or non-volatile memory, for example, one or more read only memory (ROM) modules, which for example may comprise a Flash memory and/or other electrically erasable programmable read-only memory (EEPROM) device. The code may for example be software, firmware, or hardware description language (HDL) or may be any combination of these or any other form of code for one or more processors 246 that is known by a person skilled in the art.

The electrical devices 216a-n may comprise any number and are shown in Figure 2 as including up to n electrical devices, where *n* may be any integer. The electrical devices 216a-n may be any electrical device which forms part of the control system 200 which is controllable via an initial powering of the wireless-power receiving device 212 via the mobile device 210. The electrical devices 216a-n may be operable in response to commands received from the controller 214. Thus, in use, the controller 214 may receive a request for operation from the wireless-power receiving device 212, and may issue a corresponding command to a given electrical device 216a-n, accordingly. The electrical devices 216a-n are referred to as electrical devices in that they are electrically responsive or operated and will typically include one or more electronic circuit, actuator, sensor or transducer.

As noted above in connection with Figure 1, the server 218 may be conventional and may include one or more processors 241 and one or more memory or data store 238. The server 218 may be located remotely from the premises 19 and be connected to via the network 220. The server 218 may be utilized to serve a plurality of premises 19, and/or a plurality of controllers 214/control hubs and/or a plurality of users or user accounts at one or more of the plurality of the premises 19. Hence, the server 218 may be in communication with and accessible from different premises 19 via the network 220. However, for the sake of simplicity, only one premises 19 is referred to in the following description.

The server 218 may comprise: a data store 238 comprising a register 239; an operation module 240; and an authorization module 242.

The register 239 may comprise data relating to one or more mobile devices 210; mobile device users; one or more of the wireless-power receiving devices 212 and one or more operations which are authorized for the listed mobile device 210 or user. The register 239 may be referred to as a wireless-power receiving device register.

Information may be extracted from the register 239 by one or more of the authorization module 242 or operation module 240.

In one example, the register 239 comprises a list of the users and/or mobile devices 210 registered for the system 200 and the operations which those users and/or mobile devices 210 are permitted to make following a request for operation (which may comprise an authorization request). The list of users and/or mobile devices 210 may correspond to the identification (ID) information from the mobile device 210 which is received from the wireless-power receiving device 212 as part of the request for operation. Thus, a first user, 'user 1', may be associated with one or more mobile devices 210 and be recorded as having permission to access a premises 19 via one or more entrances, as determined by wireless-power receiving devices 212 listed against that user, for example.

In addition, the register 239 may record a number of user preferences in relation to certain electrical devices 216a-n in the premises 19. Hence, if a user wishes to have a particular arrangement of lighting provided when entering the premises 19, this can be recorded within the register 239.

The register 239 may be populated during the configuration of the system 200 using a suitable input device. The input device may be provided by one of the controllers 214, or may be achieved using an application 230 on a mobile device 210 or a user terminal of the server 218 or similar. Thus, a mobile device 210 may include a control system application 230 which includes a configuration setting where users and permitted and/or preferred operations are recorded for each of the users in relation to each of the wireless-power receiving devices 212.

The authorization module 242 may receive an authorization request from the controller 214. The authorization request may comprise the identification (ID) information from the mobile device 210 which may include an identifier for the mobile device 210 and/or a user of the mobile device 210. The authorization module 242 may use this information to assess whether the mobile device 210 and/or user is authorized to carry out an operation in relation to the wireless-power receiving device 212 which has been powered prior to the transmission of the request for operation of the system 200. The authorization module 242 may read the register 239 to make a determination as to whether the mobile device 210 and/or user has the necessary permission.

The operation which is to be undertaken by the system 200 may not have been determined or selected at the time when the authorization request is transmitted. In some examples, the operation may be predetermined and encoded in the authorization request as a result of the type or location of the wireless-power receiving device 212 which was powered to transmit the request. In other examples, an operation request may be transmitted from the mobile device 210 following a successful authorization request. The operation request may be based on one or more selections made on the mobile device 210, either prior to the powering of the wireless-power receiving device 212, for example as a default setting, or in response to a user selecting an operation once authorized to do so. In other examples, the operation may be limited to a default operation for a location and a user. The default operation may be stored within the register 239.

The operation module 240 may receive a request for an operation to be carried out. The operation module 240 may determine whether the requested operation is authorized by the requesting user, for example, by referring to the register 239, and, upon a positive determination, forward the request to the controller 214, or directly to the electrical device 216a-n where possible, so as to cause the operation to be carried out.

It will be appreciated that any of the authorization module 242, operation module 240 and data store 238 including the register 239 may be incorporated in the controller 214, particularly where a server 218 is not present in the system 200. Optionally, the (or any part of the) authorization module 242, operation module 240 and/or data store 238 of the server 218 may be duplicated on the controller 214.

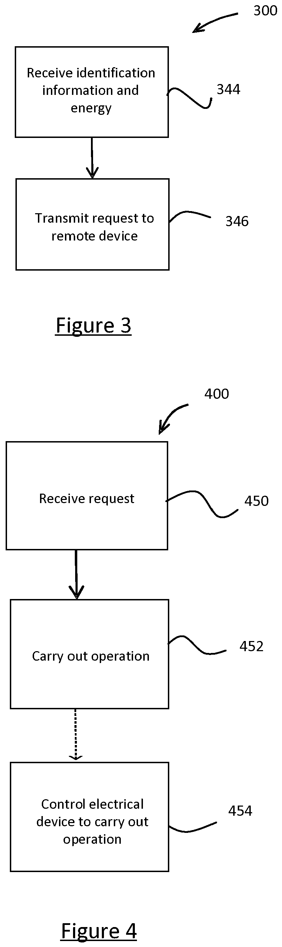

The present disclosure provides methods and systems for requesting operation of a system 200 configured to control at least a security function for a premises 19. In some examples, the method may be executed using a controller 214 based system 200 in which the wireless-power receiving device 212 transmits information to a controller 214 which then processes the information directly or via a server 218. The information may relate to a request for operation, which may comprise an authorization request. Figures 3 and 4 show respective methods from the perspective of the wireless-power receiving device 212 and controller 214 / server 218, respectively.

Figure 3 shows a method 300 of requesting operation of a system 200 configured to control at least a security function for a premises 19. The method 300 uses a wireless-power receiving device 212, the wireless-power receiving device 212 comprising a coupling interface for wirelessly receiving power and data from a wireless-power transmitting device, having a complementary coupling interface whereby the power and data is conveyed to the wireless-power receiving device 212 from the wireless-power transmitting device automatically by and upon the complementary coupling interface being held at the coupling interface, wherein the method 300 comprises, with the wireless-power receiving device 212 having been installed at the premises 19 and the wireless-power transmitting device being a mobile device 210: by and upon an action of the complementary coupling interface of the mobile device 210 being held at the coupling interface of the wireless-power receiving device 212, the wireless-power receiving device 212 receiving, in step 344, via the coupling interface and from the mobile device 210, identification information and energy for powering the wireless-power receiving device 212, the coupling interface comprising a first antenna 224 for receiving at least said energy. The wireless-power receiving device 212 using energy received from the mobile device 210 by said action to power a wireless communications interface of the wireless-power receiving device 212 having an antenna 234 that is different from said first antenna 224; and, in step 346, transmitting to a remote device, by the wireless-power receiving device 212 via the wireless communications interface powered using the energy, a request to operate the system 200 based on the identification information from the mobile device 210.

Figure 4 shows a method 400 of operating a system 200 configured to control at least a security function for a premises 19. The method 400 being carried out by a controller 214 and comprising a step 450 of receiving a request to operate the system 200 from a wireless-power receiving device 212. The request to operate the system 200 comprising at least identification information from the mobile device 210 used to power the wireless-power receiving device 212 for transmission of the request to operate the system 200. The method 400 further comprising a step 452 of carrying out the operation in accordance with the request. Optionally, the method 400 comprises a step 454 of controlling one or more electrical devices to carry out an operation in accordance with the request.

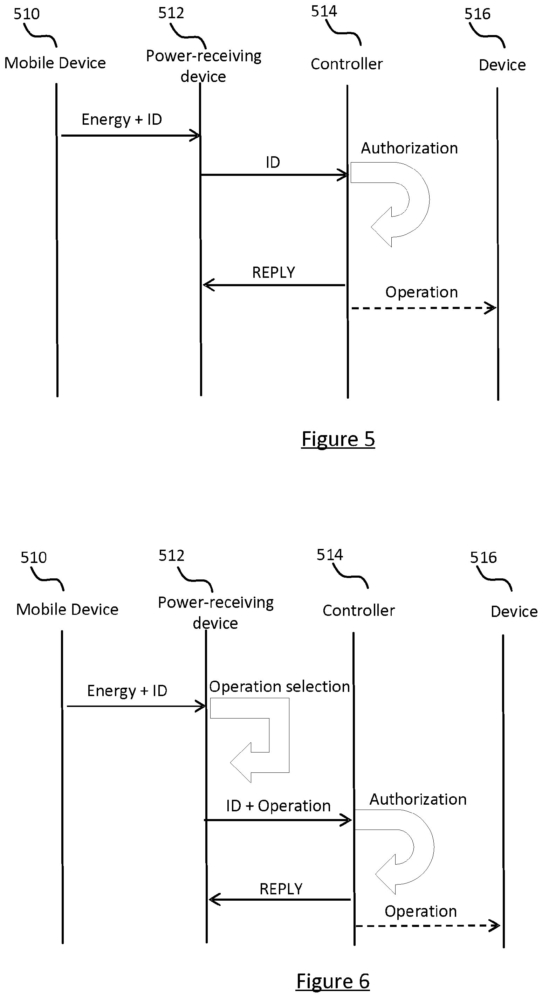

Figure 5 shows a flow diagram showing some operational steps of a control system implementing a first method. The control system may be that described in relation to Figures 1 and 2, for example. Thus, there is shown the separate entities of the control system 100, 200 comprising: a mobile device 510; a wireless-power receiving device 512; a controller 514 and an electrical device 516. Each of the elements of the system may be similar to the corresponding features described above. The electrical device 516, may be taken to have the features of the electrical devices 16, 216.

In a first step, the mobile device 510 may be activated so as to be put in a power transfer state in which the mobile device 510 can transfer energy to the wireless-power receiving device 512 when presented to the wireless-power receiving device 512. The power transfer state may be established as a default state such that a power transfer application is constantly active in the background. This may be achieved using a specific control system app, or as part of the operating system. For example, the operating system, or other software, may be in permanent standby as an NFC power transfer module. Alternatively, the power transfer state may be activated by a user logging into the mobile device 510 using one or more of a password, key code or biometric data.

Once in a power transfer state, a user may place the mobile device 510 within a power transfer distance of the wireless-power receiving device 512 which is to be powered. As described above, this distance may be application specific, but in the case of a near field communication, will require the mobile device 510 to be placed within a few centimeters of the wireless-power receiving device 512, by hand. Thus, it will be appreciated that the wireless-power receiving device 512 may be installed by a user at a convenient height and location to allow an easy presentation of the mobile device 510.

Once in the correct position or range, energy and data can be transferred from the mobile device 510 to the wireless-power receiving device 512. The data includes identification (ID) information from the mobile device 510, such as an identification number and possibly a user identifier. Following a successful energy and data transfer to the wireless-power receiving device 512, a user may be provided with an audible and/or visual indication such that the mobile device 510 can be removed from the proximity of the wireless-power receiving device 512 and stowed away or viewed in anticipation of a follow-on prompt, initiated either from the mobile device 510 itself or from the server 518, once an operation has been authorized. The audible and/or visual indication may in some embodiments be provided by the mobile device 510, and in other embodiments by the wireless-power receiving device 512.

The wireless-power receiving device 512 may then transmit the identification (ID) information from the mobile device 510 to the controller 514. As noted above, the identification information from the mobile device 510 may include one or more identifiers relating to the mobile device 510 or the user of the mobile device 510 such that the system can determine whether the person operating the mobile device 510 is authorized to carry out an operation. The operation may or may not be determined at this point, either on the basis of the wireless-power receiving device 512 including a default operation, that is, being a task specific wireless-power receiving device 512, or on the basis of the controller 514 determining a default action on receipt of the identification (ID) information from the mobile device 510.

The transmission of the identification (ID) information from the mobile device 510 to the controller 514 may constitute a request to operate the system. In some cases, the request to operate the system may comprise an authorization request.

The identification (ID) information from the mobile device 510 may be received by the controller 514 and a comparison made with a register of existing identification (ID) information for different mobile devices 510 and/or users who are permitted to carry out an operation in relation to the wireless-power receiving device 512 which has been powered. The comparison may provide a determination of whether the authorization request can be granted.

Once granted, the controller 514 may instruct the server 518 to execute a requested operation, if already known. As shown in Figure 5, the controller 514 may additionally or alternatively, provide a command to operate the one or more devices 516 which may then carry out the requested operation.

It will be appreciated that where an authorization request is not successful, the controller 514 may be configured to return a notification to the wireless-power receiving device 512 for display to the user, or take no further action.

If no operation has been requested or is not known to the controller 514 at the time of the authorization request, the controller 514 may await an operation or take steps to seek an operation, from example from a server. The controller 514 may provide a notification to the wireless-power receiving device 512 confirming that the authorization request has been successful and await an operation to be issued from the wireless-power receiving device 512 or server.

The ability of the system to initiate an operation on the basis of a user powering the wireless-power receiving device 512 with their mobile device 510, without further interaction, saves time for the user and reduces power consumption for the system overall. In the alternative prior art examples, a user may have been required to open an app upon approaching the premises 19, or location thereof, and select an action to disarm an alarm or the like. According to some of the methods described herein, there is no requirement to open an app on the mobile device 510. Where an operation is to be selected, this may be achieved using a push notification which is under the control of the server. Thus, the user can select the operation more readily and without having to engage with the mobile device 510 unnecessarily.

In one example, the operation may be predetermined based on the identification information from the mobile device 510 and, optionally, the wireless-power receiving device identification information, and/or the current status of the system (for example, the system may be configured to toggle between a lock/unlock status when a request for operation is authorized). In another example, an operation may be performed and a pop-up dialogue box from a push notification informs the user that an operation is done. In a further example, various operation options may be displayed as a pop-up dialogue box from which one of the options may be selected.

This may be in response to a push notification from the server, the server response being in response to the initial information sent from the mobile device 510 to the controller 518 (and, in turn, to the server) via the wireless-power receiving device 512. The options may include the selection of an operation for one or more electrical devices 516, or to open an app on the mobile device 510 to allow a more low level or non-standard response. Each of these examples requires less interaction from the user and power from the mobile device 510 than prior art systems requiring a user to open an app to engage with the control system.

FIG. 6 shows a flow diagram showing some operational steps for a control system implementing a second method. The second method is similar to the first method in that once a user places the mobile device 510 in the correct position or range, energy and identification (ID) information from the mobile device 510 is transferred from the mobile device 510 to the wireless-power receiving device 512. However, in this case, prior to the wireless-power receiving device 512 transmitting the identification (ID) information from the mobile device 510 to the controller 514, an operation selection procedure is carried out at the wireless-power receiving device 512, which is powered by the energy received from the mobile device 510.

The operation selection procedure may comprise the wireless-power receiving device 512 powering a user interface for a user to select one of a number of operations (e.g. arm/disarm alarm, or lock/unlock door). Once the user has input a selection, the wireless-power receiving device 512 will transmit the selected operation (or an identifier for said operation) to the controller 514 along with or in close transmission with the identification (ID) information from the mobile device 510.

As before, the controller 514 will carry out the requested operation, which may comprise an authorization request to check the identification (ID) information from the mobile device 510 matches authorized identification (ID) information stored in the controller 514 for at least the selected operation.

The controller 514 may transmit a reply to the wireless-power receiving device 512 which may comprise: an acknowledgement of receipt of the identification (ID) information from the mobile device 510 and/or selected operation; and/or an indication of whether the authorization request has been successful.

In addition, the controller 514 may carry out the authorized operation or may command an electrical device 516 to carry out the operation.

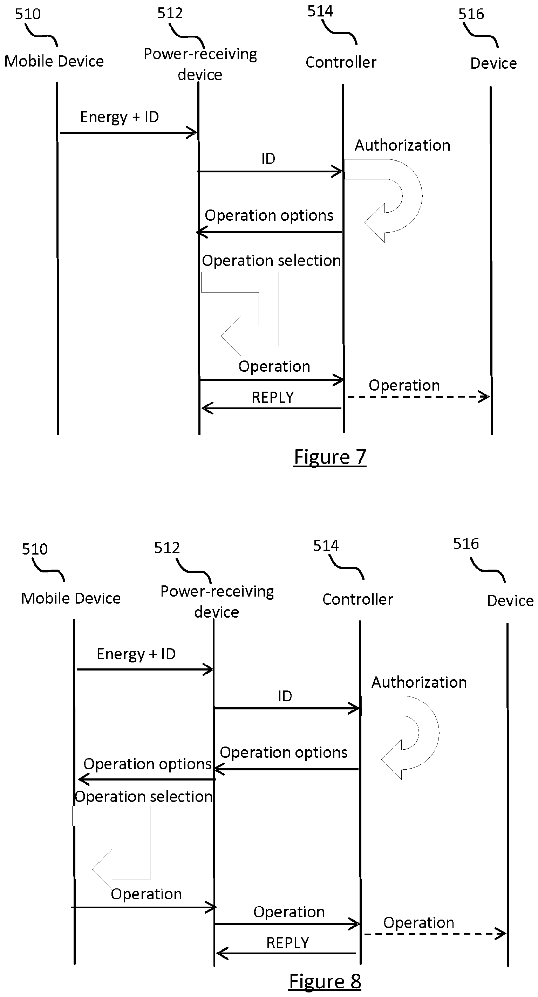

FIG. 7 shows a flow diagram showing some operational steps for a control system implementing a third method. The third method is similar to the first method in that once a user places the mobile device 510 in the correct position or range, energy and identification (ID) information from the mobile device 510 is transferred from the mobile device 510 to the wireless-power receiving device 512. The wireless-power receiving device 512 then transmits the identification (ID) information from the mobile device 510 to the controller 514 and the controller 514 carries out an authorization process to determine whether the identification (ID) information from the mobile device 510 matches authorized identification (ID) information stored in the controller 514.

In this case, the controller 514 then transmits operation options to the wireless-power receiving device 512. The operation options may comprise all authorized operations associated with the identification (ID) information from the mobile device 510 and/or the wireless-power receiving device 512.

The wireless-power receiving device 512 may then carry out an operation selection procedure providing the operation options to a user for selection via a user interface. The operation selection procedure may be powered by the energy initially received from the mobile device 510 or by a subsequent transfer of energy from the mobile device 510. Such a subsequent transfer may be achieved by holding the mobile device 510 at the wireless-power receiving device 512 a second time. Once the user has input a selection, the wireless-power receiving device 512 will transmit the selected operation (or an identifier for said operation) to the controller 514.

As before, the controller 514 may carry out the selected and authorized operation or may command an electrical device 516 to carry out the operation. The controller 514 may also transmit a reply to the wireless-power receiving device 512 which may comprise: an acknowledgement of receipt of the identification (ID) information from the mobile device 510 and/or selected operation; and/or an indication of whether the authorization request has been successful; and/or an indication of the requested operation has been successfully carried out.

FIG. 8 shows a flow diagram showing some operational steps for a control system implementing a fourth method. The fourth method is similar to the third method in that once a user places the mobile device 510 in the correct position or range, energy and identification (ID) information from the mobile device 510 is transferred from the mobile device 510 to the wireless-power receiving device 512. The wireless-power receiving device 512 then transmits the identification (ID) information from the mobile device 510 to the controller 514 and the controller 514 carries out an authorization process to determine whether the identification (ID) information from the mobile device 510 matches authorized identification (ID) information stored in the controller 514. The controller 514 then transmits operation options to the wireless-power receiving device 512. The operation options may comprise all authorized operations associated with the identification (ID) information from the mobile device 510 and/or the wireless-power receiving device 512.

In this case, wireless-power receiving device 512 then relays the operation options to the mobile device 510 using energy initially received from the mobile device 510 or by a subsequent transfer of energy from the mobile device 510. The mobile device 510 may then carry out an operation selection procedure providing the operation options to a user for selection via a user interface. Once the user has input a selection, the mobile device 510 will transmit the selected operation (or an identifier for said operation) to the wireless-power receiving device 512, which will in turn transmit the selected operation (or an identifier for said operation) to the controller 514.

As before, the controller 514 may carry out the selected and authorized operation or may command an electrical device 516 to carry out the operation. The controller 514 may also transmit a reply to the wireless-power receiving device 512 which may comprise: an acknowledgement of receipt of the identification (ID) information from the mobile device 510 and/or selected operation; and/or an indication of whether the authorization request has been successful; and/or an indication of the requested operation has been successfully carried out.

The mobile device 510 may carry out the operation selection procedure by one of the following: opening one or more applications on the mobile device 510 to instigate a response in the form of an operation selection from the user; provide the user with a notification confirming authorization and prompting a follow-on action from the user, or, send a default action to the wireless-power receiving device 512. The default action may be determined by the mobile device 510 on the basis of the wireless-power receiving device 512 location or a predetermined action assigned to the wireless-power receiving device 512 and which is stored in the mobile device 510.

The one or more applications may be task specific applications from which a user can select an operation. For example, the application may be a security application which provides the options of 'arm' and 'disarm' in the form of virtual buttons which can be pressed by a user to trigger a corresponding operation request to be transmitted. The notification presented to the user may be in the form of a conventional push notification which is displayed on screen without the need for starting an app and may provide similar options with which a user can respond with the selection of an appropriate operation.

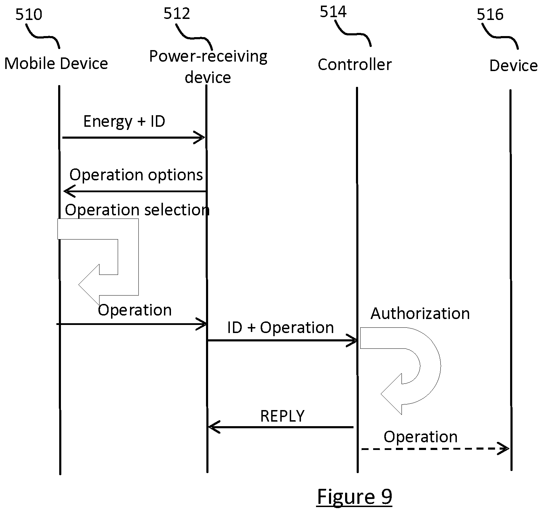

FIG. 9 shows a flow diagram showing some operational steps for a control system implementing a fifth method. The fifth method is similar to the fourth method in that once a user places the mobile device 510 in the correct position or range, energy and identification (ID) information from the mobile device 510 is transferred from the mobile device 510 to the wireless-power receiving device 512. However, prior to the wireless-power receiving device 512 transmitting the identification (ID) information from the mobile device 510 to the controller 514, the wireless-power receiving device 512 relays the operation options to the mobile device 510 using energy initially received from the mobile device 510.

The mobile device 510 then carries out an operation selection procedure providing the operation options to a user for selection via a user interface. Once the user has input a selection, the mobile device 510 will transmit the selected operation (or an identifier for said operation) to the wireless-power receiving device 512, which will in turn transmit the selected operation (or an identifier for said operation) to the controller 514, along with or in close transmission with, the identification (ID) information from the mobile device 510.

The controller 514 then carries out an authorization process to determine whether the identification (ID) information from the mobile device 510 matches authorized identification (ID) information stored in the controller 514.

If the authorization is successful, the controller 514 may carry out the selected and authorized operation or may command an electrical device 516 to carry out the operation. The controller 514 may also transmit a reply to the wireless-power receiving device 512 which may comprise: an acknowledgement of receipt of the identification (ID) information from the mobile device 510 and/or selected operation; and/or an indication of whether the authorization request has been successful; and/or an indication of the requested operation has been successfully carried out.

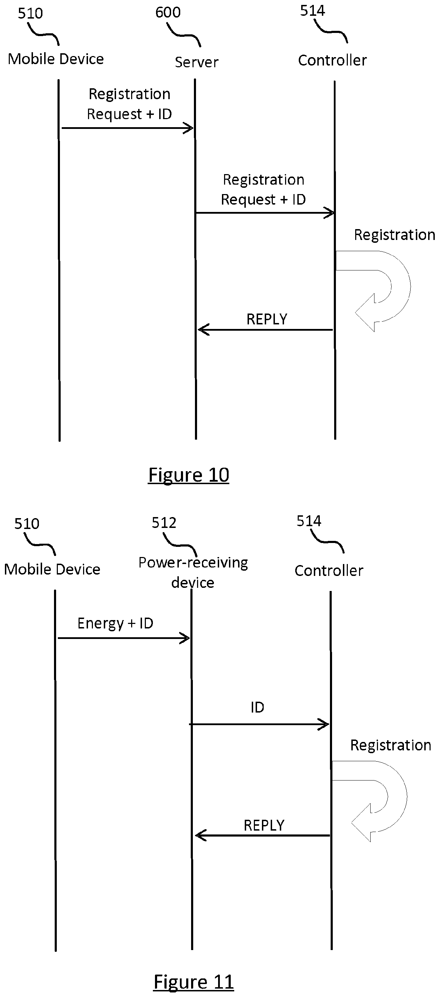

In general, prior to receiving the request to operate the system, the remote device (e.g. in the form of the controller 514); performs a registration process, in which, the remote device receives and stores, in a memory of the remote device, one or more identifiers for matching with respective identification information to be received from one or more mobile devices. Example embodiments detailing two possible ways in which the remote device may receive the one or more identifiers in the registration process, are illustrated in FIG. 10 and FIG. 11 and described in detail below. Thereafter, in response to receiving the request to operate the system, the remote device checks whether the one or more identifiers comprises an identifier corresponding to the identification information from the mobile device requesting to operate the system, to determine whether the identification information from said mobile device corresponds to an authorized mobile device and/or to an authorized user.

FIG. 10 shows a flow diagram showing some operational steps for a control system implementing a sixth method. The sixth method relates to a registration process for registering, via a server 600, an identifier for the identification (ID) information from the mobile device 510, with the controller 514 such that the identifier may be stored in the controller 514 (e.g. in a memory of the controller 514) for use in a subsequent authorization procedure. The server 600 is located via a wide area network (WAN), such as the internet, which facilitates communication between the server 600 and the controller 514.

In this case, the mobile device 510 is configured to communicate with the server 600, via a cellular communication protocol, to provide an identifier corresponding to the identification (ID) information from the mobile device 510, along with a registration request. The registration request may be initiated by a user via an application on the mobile device 510. The application is configured to generate and transmit the registration request, to the server 600, to register the mobile device 510 via the registration process.

The server 600 receives the registration request and the identifier from the mobile device 510 and transmits the identifier from the mobile device 510 and the registration request to the controller 514, via the WAN.

The controller 514 then carries out the registration process for registering the identifier from the mobile device 510 with the controller 514. In this case, the registration request instructs the controller 514 to enter into a registration mode. Thus, when the controller 514 receives the identifier from the mobile device 510 and the registration request, it will automatically register the identifier in the register 239, for future authorization.

The controller 514 may be configured to allow users to register user and/or identification (ID) information from the mobile device 510 that initiated the registration request for any operations and/or preferred operations in relation to one or more wireless-power receiving devices 212. In addition, the controller 514 may be configured to allow users to register user and/or identification (ID) information from other mobile devices, via the mobile device 510 that initiated the registration request, for any operations and/or preferred operations in relation to one or more wireless-power receiving devices 212. Data relating to the above may be transmitted from the mobile device 510 as part of the registration request and/or in a subsequent request.

The mobile device 510 may be configured to receive user input in relation to the registration and/or subsequent request via a user interface, when the mobile device 510 is running the application. The mobile device 510 may then transmit the user input in relation to the registration and/or subsequent request to the server 600 via the cellular communication protocol and the server 600 will relay the user input to the controller 514, via the WAN.

The controller 514 may transmit, via the WAN, a reply to the server 600 which may comprise: an acknowledgement of receipt of the identification (ID) information from the mobile device 510 and/or the registration request; and/or an indication of whether the registration process has been successful. Optionally, the server 600 may relay any reply received from the controller 514 to the mobile device 510, via the cellular communication protocol.

In some embodiments, the controller 514 may further receive, from the mobile device 510, via the server 600, an identifier corresponding to identification information from a different mobile device and an instruction to at least one of add, change or delete a registered authorization permission in respect of the different mobile device. The identifier corresponding to identification information from the different mobile device and the instruction to at least one of add, change or delete the registered authorization permission in respect of the different mobile device may be received by the controller 514 from the server 600 in response to a request received by the server 600, from the mobile device 510, via the cellular communication protocol.

The one or more identifiers may therefore comprise a plurality of identifiers for matching with a plurality of mobile devices and/or a plurality of authorized users. The one or more identifiers may comprise a plurality of device IDs for matching with a respective plurality of mobile devices.

The server 600 may comprise configuration information for the controller 514 and, optionally, for a plurality of other remote devices (e.g. other controllers located in different premises or different parts of the same premises) configurable to have the same functionality as said controller 514. The server 600 may be programmed with at least some of the configuration information and/or at least some of the configuration information may be set by a user via an application on a mobile device. For example, the configuration information may comprise authorization information relating to authorized users and/or identifiers for authorized mobile devices; and/or an authentication key comprising a public key of a mobile device to authenticate that the identification information from said mobile device (which may be signed using a private key of the mobile device) actually came from said mobile device identified by the identification information, using public key cryptography.

In some embodiments, the controller 514 will receive an authentication key from the server 600, via the wide area network (WAN); and use the authentication key to authenticate that the identification information from said mobile device 510 actually came from the mobile device 510 identified by the identification information.

FIG. 11 shows a flow diagram showing some operational steps for a control system implementing a seventh method. The seventh method is similar to the sixth method and relates to a registration process for registering, via the wireless-power receiving device 512, the identification (ID) information from the mobile device 510 with the controller 514 such that the identification (ID) information may be stored in the controller 514 (e.g. in a memory of the controller 514) for use in a subsequent authorization procedure.

In the embodiment of FIG. 11, the controller 514 receives an identifier corresponding to the identification information from the mobile device 510, via the wireless-power receiving device 512.

In this case, the registration process comprises a preliminary action of the complementary coupling interface of the mobile device 510 being held at the coupling interface of the wireless-power receiving device 512.

As described previously, once a user places the mobile device 510 in the correct position or range, energy and identification (ID) information from the mobile device 510 is transferred from the mobile device 510 to the wireless-power receiving device 512. In other words, the computer program product is configured such that, when executed by the at least one processor of the mobile device 510, causes the mobile device 510 to convey the power and data to the wireless-power receiving device automatically by and upon the complementary coupling interface being held at the coupling interface, the data comprising identification information.

The wireless-power receiving device 512 then transmits the identification (ID) information from the mobile device 510 to the controller 514.

In this case, the controller 514 carries out the registration process for registering the identification (ID) information from the mobile device 510 with the controller 514. In some embodiments, the controller 514 may be placed in a registration mode prior to the user placing the mobile device 510 in the correct position or range for energy and data transfer from the mobile device 510 to the wireless-power receiving device 512. Thus, when the controller 514 receives the identification (ID) information from the mobile device 510, it will automatically register the identification (ID) information from the mobile device 510 in the register 239. The controller 514 may be configured to allow users to register identification (ID) information from the mobile device 510 for any operations and/or preferred operations may be recorded for each user or identification (ID) information from the mobile device 510 in relation to one or more wireless-power receiving devices 212.

The controller 514 may also transmit a reply to the wireless-power receiving device 512 which may comprise: an acknowledgement of receipt of the identification (ID) information from the mobile device 510; and/or an indication of whether the registration process has been successful.

Although an initial registration process may be performed in accordance with FIG. 11, any subsequent addition, change or deletion of registered authorization permissions may need to be performed via an application on the mobile device, which relays the information to the controller 514, via the server 600, as described above in relation to FIG. 10.

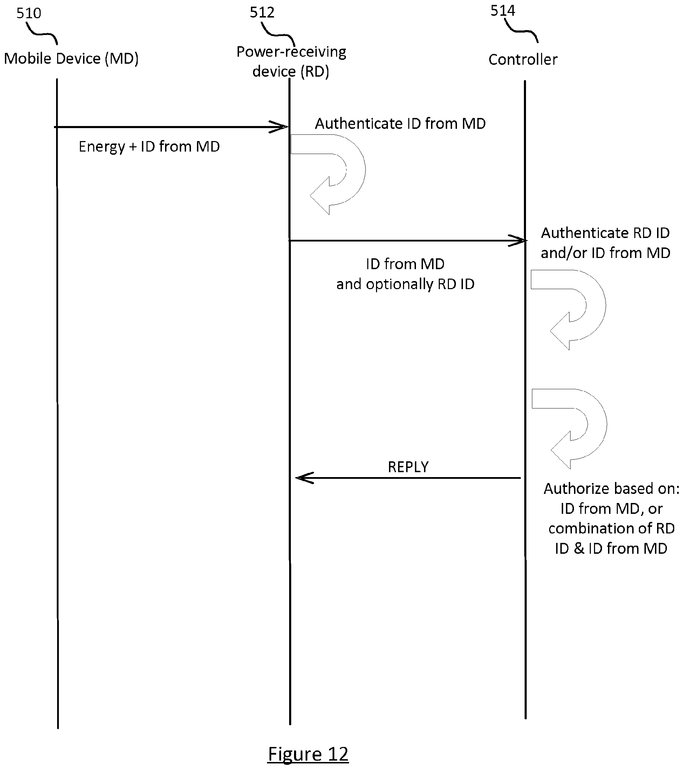

FIG. 12 shows a flow diagram showing some operational steps for a control system implementing an eighth method. The eighth method is similar to the several of the above methods in that once a user places the mobile device 510 in the correct position or range, energy and identification (ID) information from the mobile device (MD) 510 is transferred from the mobile device 510 to the wireless-power receiving device 512. However, prior to the wireless-power receiving device 512 transmitting the identification (ID) information from the mobile device (MD) 510 to the controller 514, the wireless-power receiving device 512 performs an authentication process to authenticate the identification (ID) information from the mobile device (MD) 510.

The authentication process may comprise verifying that information (in this case the particular ID), purportedly from a particular source (e.g. the mobile device (MD) 510), does in fact come from that source. Any known authentication techniques may be used to achieve the authentication.

In a specific example, the wireless power receiving device 512 may authenticate the mobile device 10 by authenticating the identification information (ID) from the mobile device (MD) 510 that is used in an authorization request. The authentication may, for example, comprise the wireless power receiving device 512 issuing a challenge to the mobile device 510, wherein a correct response by the mobile device 510 indicates that the mobile device 510 is authentic. Additionally or alternatively cryptography may be used. For example, a private key of the mobile device 510 may be used to sign the identification information (ID) that it provides to the wireless power receiving device 512, and the wireless power receiving device 512 may authenticate the mobile device 510 using a public key of the mobile device 510. Optionally, authentication may be achieved using an authentication tool available by the wireless communication protocol (e.g. NFC or Qi) employed to convey the identification information (ID) from the mobile device (MD) 510 to the wireless power receiving device 512.

Once the authentication process is successfully completed, the wireless-power receiving device 512 will transmit the identification (ID) information from the mobile device (MD) 510 to the controller 514, optionally, along with or in close transmission with, identification (ID) information from the wireless-power receiving device (RD) 512.

The controller 514 may also perform an authentication process to authenticate the identification (ID) information from the mobile device (MD) 510 and/or the identification (ID) information from the wireless-power receiving device (RD) 512, for example using one of the techniques referred to above or any other technique. The authentication of the identification (ID) information from the wireless-power receiving device (RD) 512 may comprise the controller 514 issuing a challenge to the wireless power receiving device 512, wherein a correct response by the wireless power receiving device 512 indicates that the wireless power receiving device 512 is authentic. Additionally or alternatively cryptography may be used. For example, a private key of the wireless power receiving device 512 may be used to sign the wireless power receiving device 512 identification information (RD ID), and the controller 514 may authenticate the wireless power receiving device 512 using a public key of the wireless power receiving device 512.

Once the authentication process is successfully completed, the controller 514 may then carry out an authorization process to determine whether the identification (ID) information from the mobile device (MD) 510 alone or in combination with the identification (ID) information from the wireless-power receiving device (RD) 512, matches authorized identification (ID) information stored in the controller 514.

If the authorization is successful, the controller 514 may carry out the authorized operation or may command an electrical device 516 to carry out the operation. The controller 514 may also transmit a reply to the wireless-power receiving device 512 which may comprise: an acknowledgement of receipt of the identification (ID) information from the mobile device (MD) 510 and/or the identification (ID) information from the wireless-power receiving device (RD) 512; and/or an indication of whether the authentication process has been successful; and/or an indication of whether the authorization request has been successful; and/or an indication of the requested operation has been successfully carried out.

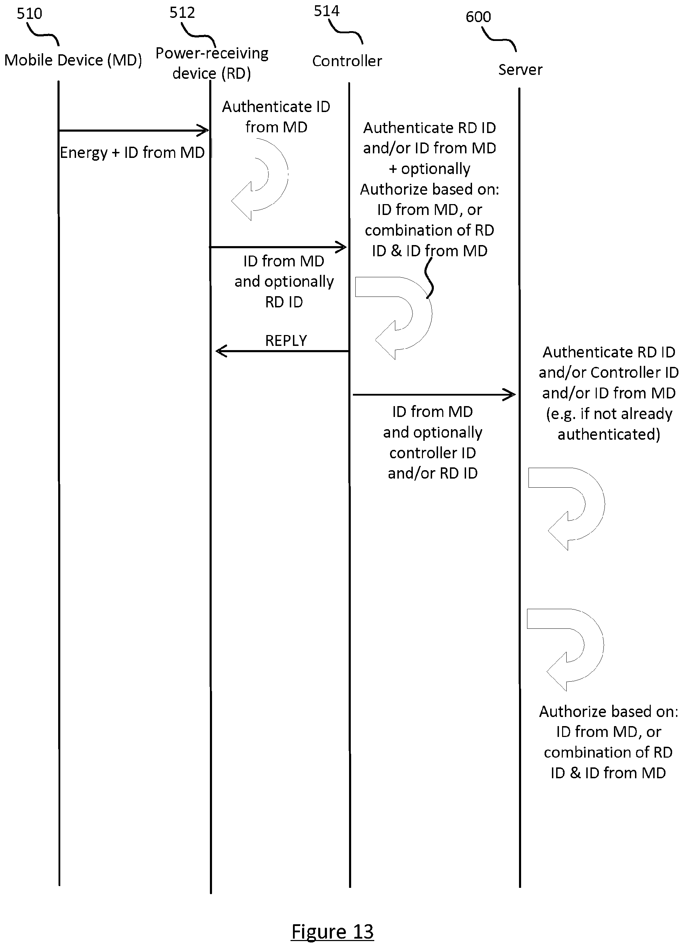

FIG. 13 shows a flow diagram showing some operational steps for a control system implementing a ninth method. The ninth method is similar to the eighth method in that once a user places the mobile device 510 in the correct position or range, energy and identification (ID) information from the mobile device (MD) 510 is transferred from the mobile device 510 to the wireless-power receiving device 512. In addition, prior to the wireless-power receiving device 512 transmitting the identification (ID) information from the mobile device (MD) 510 to the controller 514, the wireless-power receiving device 512 performs an authentication process to authenticate the identification (ID) information from the mobile device (MD) 510.

The authentication process may comprise verifying that information (in this case the particular ID), purportedly from a particular source (e.g. the mobile device (MD) 510), does in fact come from that source. Any known authentication techniques, such as those described previously, may be used to achieve the authentication.

Once the authentication process is successfully completed, the wireless-power receiving device 512 will transmit the identification (ID) information from the mobile device (MD) 510 to the controller 514, optionally, along with or in close transmission with, identification (ID) information from the wireless-power receiving device (RD) 512.

The controller 514 may also perform an authentication process to authenticate the identification (ID) information from the mobile device (MD) 510 and/or the identification (ID) information from the wireless-power receiving device (RD) 512, for example using one of the techniques referred to above or any other technique.

Once the authentication process is successfully completed, the controller 514 may, optionally, carry out an authorization process to determine whether the identification (ID) information from the mobile device (MD) 510 alone or in combination with the identification (ID) information from the wireless-power receiving device (RD) 512, matches authorized identification (ID) information stored in the controller 514.

If the authentication process and, optionally, the authorization is successful, the controller 514 may transmit the identification (ID) information from the mobile device (MD) 510 to the server 600, optionally, along with or in close transmission with, identification (ID) information from the wireless-power receiving device (RD) 512 and/or identification (ID) information from the controller 514.

The server 600 may also perform an authentication process to authenticate the identification (ID) information from the mobile device (MD) 510 and/or the identification (ID) information from the wireless-power receiving device (RD) 512 and/or the identification (ID) information from the controller 514, for example using one of the techniques referred to above or any other technique.

Once the optional authentication process is successfully completed, the server 600 may carry out an authorization process to determine whether the identification (ID) information from the mobile device (MD) 510 alone or in combination with the identification (ID) information from the wireless-power receiving device (RD) 512, matches authorized identification (ID) information stored in the register 239.

The server 600 may then carry out the authorized operation or may command the controller 514 or an electrical device 516 to carry out the operation.

The controller 514 and/or the server 600 may transmit a reply to the wireless-power receiving device 512 or controller 514, respectively, which may comprise: an acknowledgement of receipt of the identification (ID) information from the mobile device (MD) 510 and/or the identification (ID) information from the wireless-power receiving device (RD) 512; and/or an indication of whether the authentication process has been successful; and/or an indication of whether the authorization request has been successful; and/or an indication of the requested operation has been successfully carried out.

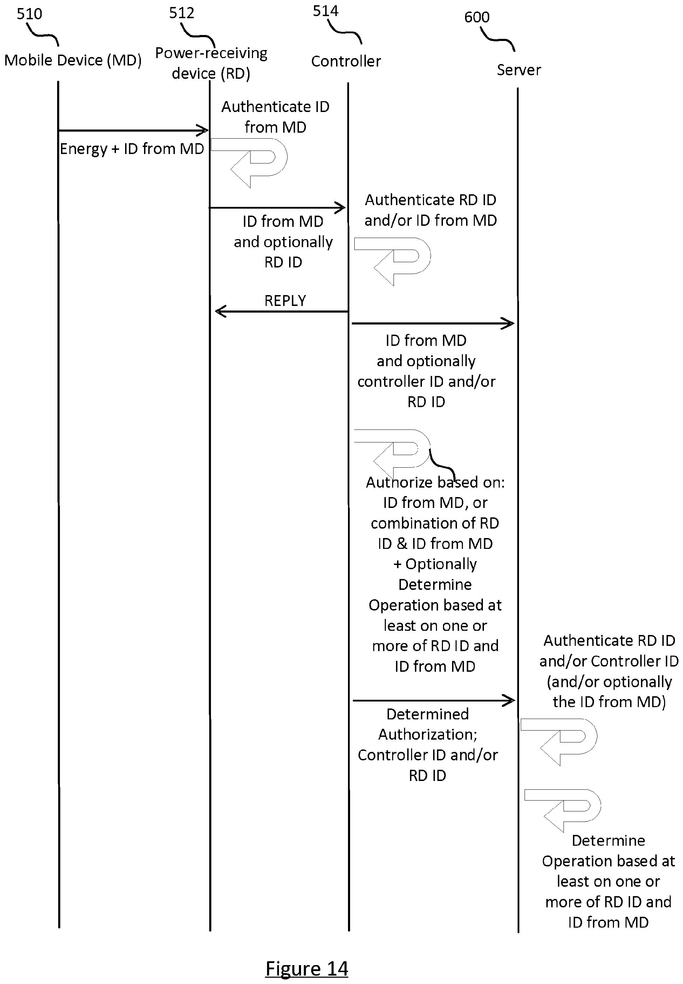

FIG. 14 shows a flow diagram showing some operational steps for a control system implementing a tenth method. The tenth method is similar to the ninth method in that once a user places the mobile device 510 in the correct position or range, energy and identification (ID) information from the mobile device (MD) 510 is transferred from the mobile device 510 to the wireless-power receiving device 512. In addition, prior to the wireless-power receiving device 512 transmitting the identification (ID) information from the mobile device (MD) 510 to the controller 514, the wireless-power receiving device 512 performs an authentication process to authenticate the identification (ID) information from the mobile device (MD) 510.

The authentication process may comprise verifying that information (in this case the particular ID), purportedly from a particular source (e.g. the mobile device (MD) 510), does in fact come from that source. Any known authentication techniques, such as those described previously, may be used to achieve the authentication.

Once the authentication process is successfully completed, the wireless-power receiving device 512 will transmit the identification (ID) information from the mobile device (MD) 510 to the controller 514, optionally, along with or in close transmission with, identification (ID) information from the wireless-power receiving device (RD) 512.

The controller 514 may also perform an authentication process to authenticate the identification (ID) information from the mobile device (MD) 510 and/or the identification (ID) information from the wireless-power receiving device (RD) 512, for example using one of the techniques referred to above or any other technique.

Once the authentication process is successfully completed, the controller 514 may transmit the identification (ID) information from the mobile device (MD) 510 to the server 600, optionally, along with or in close transmission with, identification (ID) information from the wireless-power receiving device (RD) 512 and/or identification (ID) information from the controller 514.

The controller 514 may also carry out an authorization process to determine whether the identification (ID) information from the mobile device (MD) 510 alone or in combination with the identification (ID) information from the wireless-power receiving device (RD) 512, matches authorized identification (ID) information stored in the controller 514.

Optionally, the controller 514 may determine an operation to be carried out based on one or more of the identification (ID) information from the mobile device (MD) 510 and the identification (ID) information from the wireless-power receiving device (RD) 512.

The controller 514 may transmit the authorization outcome and optionally, the determined operation, to the server 600 and, optionally, the identification (ID) information from the wireless-power receiving device (RD) 512 and/or identification (ID) information from the controller 514, for example, if not relayed previously.

The server 600 may also perform an authentication process to authenticate the identification (ID) information from the wireless-power receiving device (RD) 512 and/or the identification (ID) information from the controller 514, and, optionally, the identification (ID) information from the mobile device (MD) 510 for example using one of the techniques referred to above or any other technique.

Once the optional authentication process is successfully completed, the server 600 may, if not previously determined, determine an operation to be carried out based on one or more of the identification (ID) information from the mobile device (MD) 510 and the identification (ID) information from the wireless-power receiving device (RD) 512.

The server 600 may then carry out the authorized operation or may command the controller 514 or an electrical device 516 to carry out the operation.

The controller 514 and/or the server 600 may transmit a reply to the wireless-power receiving device 512 or controller 514, respectively, which may comprise: an acknowledgement of receipt of the identification (ID) information from the mobile device (MD) 510 and/or the identification (ID) information from the wireless-power receiving device (RD) 512; and/or an indication of whether the authentication process has been successful; and/or an indication of whether the authorization request has been successful; and/or an indication of the requested operation has been successfully carried out.

In an example, the controller 514 may determine that a user of a mobile device 510 (i.e. associated with the identification (ID) information from the mobile device (MD) 510) is a cleaner and the time at which the mobile device 510 is presented to a wireless-power receiving device 512 for operation of system, is 2am. The server 600, but not the controller 514, may know that the cleaner is authorized to enter the premises 19 between certain times. As such, the identification (ID) information from the user's mobile device (MD) 510 may be authenticated by the controller 514, but the server 600 may determine what (if any) operations they can perform at 2am, for example, the cleaning person may be allowed to only enter to the lower section of a building or they may be permitted to turn on a light but not open a door.

Where a response is required from a user, the interaction with the user (e.g. if they need to provide input after the initial tapping action of the mobile device 510 at the wireless power receiving device 512) should be performed by the controller 514 and not the server 600. This is because it would take too long to involve the server 600, especially given that the wireless power receiving device 512 only has a limited amount of power that it receives from the tap, and therefore it can only listen to signals from the mobile device 510 for a relatively short period of time.

However, optionally, the user may not be required to input any additional information after the initial tap action. In this case it is useful at least for the remote device (e.g. controller 514) to quickly acknowledge receipt (if not also authentication or even authorization) relating to the identification information from the mobile device 510, so that some feedback can be provided by the wireless power receiving device 512 to the user (e.g. a noise and/or visual indication) confirming that the system has responded as it was supposed to; and so as far as the user is concerned their tapping action was properly registered by the system.

The above may hold true even if the authorization of the operation occurs at the server 600 after feedback is given to the user. It does not necessarily matter if it takes time to open a door or turn on a light (or to even determine whether such an operation is to occur), as long as the user knows their tap was registered correctly.

Methods described herein may be implemented by executing a computer program product (e.g. software comprising code), which may be provided on a non-transient carrier computer readable medium, and/or by executing code provided on a transient carrier, e.g. a signal. Thus, a carrier medium may be provided which stores processor implementable instructions, which, when executed by a processor (which may be a processing system), causes the processor to implement a method described herein, wherein the carrier medium may be transient or non-transient.

The methods may be implemented, by means of executing such code or otherwise, on a processor, the processor comprising at least one processing device. For example, the processor may comprise: at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU); and/or a graphics processing unit (GPU), control and/or processing circuitry comprised of discrete electronic circuit elements including passive (e.g. resistor, capacitor, inductor, diode) and/or active (e.g. transistor or vacuum tube) elements; and/or transceiver(s) to perform the methods described herein.

A receiver and transmitter may be provided by a transceiver or by respective distinct processing components. In some embodiments a CPU may include a receiver and/or transmitter, or one or more part thereof, while in other embodiments a receiver and/or transmitter may be entirely separate from a CPU. The receiver and transmitter may be part of a communication module of the apparatus, which may be configured to provide wired or wireless communication. Wireless communication may for example be via Bluetooth, including Bluetooth Low Energy (BLE), an IEEE 802.11 compliant protocol (e.g. WiFi) IEEE 802.15.4 compliant protocol (e.g. ZigBee), ultra-wideband, or the like, which may be used to communicate in a wireless home, local, or personal area network. Further wireless communication may be via a 3GPP compliant protocol, for example, 3G, 4G (including LTE) or 5G.

The processor may be incorporated on an apparatus or system, which may be a single device or a group of devices. The apparatus or system may comprise a memory, that may be comprised of one or more memory devices, that is separate from the at least one processing device and/or partly or wholly integrated onto a common chip(s) with the at least one processing device. Thus, the processor and/or the memory may be distributed. The memory may store code that, when read by the processor, causes performance of any of the methods described herein, and/or as illustrated in in the drawings. Thus, the memory may be a computer readable medium. For example, the memory may comprise: volatile memory, for example, one or more dynamic random access (DRAM) modules and/or static random access memory (SRAM) modules; and/or non-volatile memory, for example, one or more read only memory (ROM) modules, which for example may comprise a Flash memory and/or other electrically erasable programmable read-only memory (EEPROM) device. The code may for example be software, firmware, or hardware description language (HDL) or may be any combination of these or any other form of code for one or more processors that is known by a person skilled in the art. Although the processing and memory components may be depicted herein as separate from each other, they may be at least partly integrated into common hardware, e.g. a single chip.

Further, in other embodiments, a memory component of the apparatus or system may instead or at least in part be provided by a memory device(s) that may in some embodiments be separate or removable from a unit of the apparatus or system. Such devices may comprise magnetic storage devices (e.g., hard disk, floppy disk, magnetic strips), optical disks (e.g., compact disk (CD), digital versatile disk (DVD)), smart cards, and removable flash memory devices (e.g., card, stick, key drive). Further the memory components may be distributed. For example a distributed server may store code which may be downloaded to the apparatus or system for execution by the at least one processing device described herein, to perform any method described herein that is executable by the at least one processing device. In some embodiments the downloaded code may be stored on local memory of the apparatus or system before execution by the at least one processing device.

The apparatus or system may comprise one or more transducing members, e.g. antennas (e.g. for a transmitter/receiver/transceiver) or antenna arrays (e.g. for a transducer or radar), pyroelectric sensing elements (e.g. for passive infrared motion detector), magnetic sensors (e.g. for a door/window sensor), image sensors (e.g. for a camera), accelerometers (e.g. for detecting device movement), output sound transducers (e.g. for a speaker or sonar), input sound transducers (e.g. for a microphone, or sonar), smoke detection transducers, gas detection transducers, pressure sensors (e.g. for presence detection based on a person's weight), LIDAR transducing elements, transducing elements for a satellite navigation system (e.g. GPS), etc.

Based on these transducing elements the apparatus or system may comprise the following modules: a motion detector (e.g. by means of a passive infrared motion detector or a Doppler-based active reflected wave detector) and/or a ranging active reflected wave detector (e.g. 3-dimensional radar, sonar or LIDAR), a camera (e.g. still or video camera, which be visual and/or IR camera or a thermal camera), and/or a door/window sensor, and/or speaker, and/or microphone, and/or one or more transceivers, and/or a satellite navigation system device, and/or an Inertial Motion Unit (IMU), which may comprise a multi-dimensional accelerometer and optionally a multi-dimensional gyroscope and/or a multi-dimensional magnetometer. Processing functions of such modules may be performed on application specific chips, but additionally or alternatively may be performed, partly or entirely, by a CPU of the apparatus.

The apparatus may further comprise an Input/Output interface for local user interaction, which may comprise a touchscreen, keypad, switches and/or buttons, etc.

The apparatus may further comprise or be communicatively coupled with one or more devices for providing local response to a security event. Such devices may comprise an alarm siren, and/or a visual alarm device (e.g. a strobe light), and/or a light obscuring matter emitting device (e.g. fog or smoke shield device) or other deterrent device.

The meaning of "first" and "second", as used herein, is not intended to imply a temporal ordering in which the first must precede the second.

The term "module" as used herein may refer to software or other processor implementable code, or to hardware or to a combination thereof.

Where a given item is referenced herein with the preposition "a" or "an", it is not intended to exclude the possibility of additional instances of such an item, unless context requires otherwise.

Where the specification defines a range, the stated outer extremities of the range are part of the range, unless context requires exclusion of the outer extremities from the range. For example, a range defined in terms of being between X and Y or from X to Y, should be interpreted as including X and Y.

The invention disclosed and defined herein extends to all plausible combinations of two or more of the individual features mentioned or evident from the text or drawings. All of these different combinations constitute various alternative aspects of the invention.

As used herein, except where the context requires otherwise, the terms "comprises", "includes", "has", and grammatical variants of these terms, are not intended to be exhaustive. They are intended to allow for the possibility of further additives, components, integers or steps.

As used herein, unless context demands otherwise, the expression "one or more of x and y" or "at least one of x and y", should be interpreted to cover: (i) at least one x, (ii) at least one y, (iii) at least one x and at least one y. That is, there may be, but need not be, both element x and element y. The same applies to any equivalent expressions referring to more than two elements, e.g., the expression "at least one of x, y, and z". The same interpretation should likewise be applied to the expressions "x, y, and/or z" and "at least x, y, and/or z".

Any reference numerals included herein, particularly but not only in the claims that follow, are included merely to potentially aid the reader in roughly understanding one or more of the exemplary embodiments disclosed herein. The inclusion of any reference numerals included in relation to features in the claims is not intended to imply that those reference numerals are necessarily the only relevant reference numerals or disclosed examples that correspond to such features. The inclusion of the numerals in the claims is not intended to limit or in any other way impact the interpretation or scope of the claims or any terms herein.

Embodiments described herein that are, wherever possible, applicable to any one aspect disclosed herein are also applicable to any other disclosed aspect. For example, features listed in clauses that are dependent on an independent clause are, wherever possible, to be understood to also be applicable to any other independent clause. For example, the wireless power-receiving device according to the second aspect of the invention may be configured to perform the method of the first aspect of the invention and all embodiments thereof that may be performed on a wireless power-receiving device.

## Claims

1. A system configured to control at least a security function for a premises, the system comprising:
a wireless-power receiving device, for installation at the premises, comprising a wireless communications interface and a coupling interface; the coupling interface being configured for wirelessly receiving power and data from a wireless-power transmitting device which is constituted by a mobile device comprising at least one processor and a complementary coupling interface;
a computer readable data carrier comprising instructions which, when executed by the at least one processor of the wireless-power transmitting device, cause the wireless-power transmitting device to convey the power and data to the wireless-power receiving device automatically by and upon the complementary coupling interface being held at the coupling interface, the data comprising identification information; and
a remote device;
the system being configured such that:
by and upon an action of the complementary coupling interface of the mobile device being held at the coupling interface of the wireless-power receiving device, the wireless-power receiving device receiving via the coupling interface and from the mobile device, the identification information and energy for powering the wireless-power receiving device, the coupling interface comprising a first antenna for receiving at least said energy;
using energy received from the mobile device by said action to power the wireless communications interface of the wireless-power receiving device having an antenna that is different from said first antenna;
transmitting to the remote device, by the wireless-power receiving device via the wireless communications interface powered using the energy, a request to operate the system based on the identification information from the mobile device; and
the remote device, in response to receiving the request to operate the system, carrying out an authorization process using the identification information from the mobile device.

2. The system of claim 1 wherein in carrying out the authorization process, the remote device is configured to determine, based on the identification information from the mobile device, whether the identification information from the mobile device corresponds to an authorized mobile device and/or to an authorized user.

3. The system of claim 1 or 2 wherein the remote device is configured to perform an authentication process to authenticate the mobile device.

4. The system of claim 3 wherein the remote device is configured to authenticate the mobile device by authenticating the identification information from the mobile device.

5. The system of claim 3 or 4 wherein the remote device is configured to authenticate the mobile device using a public key of the mobile device; and the instructions are further configured to cause the wireless-power transmitting device to use a private key of the mobile device to sign the identification information that the mobile device provides to the wireless power receiving device.

6. The system of any of claims 3 to 5 wherein the remote device is further configured to transmit to the wireless-power receiving device a response to the request to operate the system, the response comprising a determination made by the remote device based on the identification information received from the mobile device, the determination comprising that the remote device has authenticated a source of the identification information.

7. The system of any preceding claim wherein the remote device is further configured to perform a registration process, prior to receiving the request to operate the system;
wherein, in the registration process, the remote device is configured to receive and store one or more identifiers for matching with respective identification information to be received from one or more mobile devices;
wherein, in response to receiving the request to operate the system, the remote device is configured to check whether the one or more identifiers comprises an identifier corresponding to the identification information from the mobile device to determine whether the identification information from the mobile device mobile device corresponds to an authorized mobile device and/or to an authorized user.

8. The system of claim 7 wherein, in the registration process, the remote device is configured to receive an identifier corresponding to the identification information from the mobile device, from the wireless-power receiving device, in response to a preliminary action of the complementary coupling interface of the mobile device being held at the coupling interface of the wireless-power receiving device for the registration process.

9. The system of claim 7 comprising a server located via a wide area network (WAN) that includes the server and the remote device; and
wherein, in the registration process, the remote device is configured to receive an identifier corresponding to the identification information from the mobile device, via the server;
the server being configured to receive said identifier from the mobile device.

10. The system of claims 7 or 8 comprising a server located via a wide area network (WAN) that includes the server and the remote device, or the system of claim 9, wherein the remote device is further configured to:
receive an identifier corresponding to identification information from a different mobile device and an instruction to at least one of add, change or delete a registered authorization permission in respect of the different mobile device;
wherein the identifier corresponding to identification information from the different mobile device and the instruction to at least one of add, change or delete the registered authorization permission in respect of the different mobile device is received by the remote device via the server.

11. The system of any preceding claim wherein the wireless-power receiving device is further configured to receive input from a user via a user interface, the input comprising a selection for defining at least one operation to be performed by the system.

12. The system of claim 11 wherein the user interface is on the wireless-power receiving device.

13. The system of claim 11 wherein the user interface is on the mobile device and the wireless-power receiving device is configured to communicate with the mobile device using the coupling interface to receive the input from the user via the user interface on the mobile device.

14. The system of any of claims 11 to 13 wherein the wireless-power receiving device is configured to transmit a request to the remote device for the at least one operation to be performed by the system; optionally, the at least one operation to be performed by the system comprises an ARM and/or DISARM instruction for a security device.

15. A method of requesting operation of a system configured to control at least a security function for a premises, the method using a wireless-power receiving device, the wireless-power receiving device comprising a coupling interface for wirelessly receiving power and data from a wireless-power transmitting device having a complementary coupling interface whereby the power and data is conveyed to the wireless-power receiving device from the wireless-power transmitting device automatically by and upon the complementary coupling interface being held at the coupling interface, wherein the method comprises, with the wireless-power receiving device having been installed at the premises and the wireless-power transmitting device being a mobile device:
by and upon an action of the complementary coupling interface of the mobile device being held at the coupling interface of the wireless-power receiving device, the wireless-power receiving device receiving via the coupling interface and from the mobile device, identification information and energy for powering the wireless-power receiving device, the coupling interface comprising a first antenna for receiving at least said energy;
using energy received from the mobile device by said action to power a wireless communications interface of the wireless-power receiving device having an antenna that is different from said first antenna;
transmitting to a remote device, by the wireless-power receiving device via the wireless communications interface powered using the energy, a request to operate the system based on the identification information from the mobile device; and
the remote device, in response to receiving the request to operate the system, carrying out an authorization process using the identification information from the mobile device.
